(19) Europäisches Patentamt
European Patent Office
Office européen des brevets

(11) **EP 3 255 914 A1**

(12) **EUROPEAN PATENT APPLICATION**
published in accordance with Art. 153(4) EPC

(43) Date of publication:
**13.12.2017 Bulletin 2017/50**

(51) Int Cl.:
*H04W 12/04* (2009.01)    *H04W 12/06* (2009.01)

(21) Application number: **15882974.7**

(86) International application number:
**PCT/CN2015/073400**

(22) Date of filing: **28.02.2015**

(87) International publication number:
**WO 2016/134536 (01.09.2016 Gazette 2016/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co. Ltd.
Shenzhen, Guangdong 518129 (CN)**

(72) Inventors:
• **LI, Xing
Beijing 100082 (CN)**
• **LI, Zhenzhen
Beijing 100082 (CN)**
• **CHEN, Jing
Shenzhen
Guangdong 518129 (CN)**

(74) Representative: **Pfenning, Meinig & Partner mbB
Patent- und Rechtsanwälte
Joachimsthaler Straße 10-12
10719 Berlin (DE)**

(54) **KEY GENERATION METHOD, DEVICE AND SYSTEM**

(57)    Embodiments of the present invention relate to the communications field, and provide a key generation method, device, and system. The method includes: after receiving a first command, obtaining, by UE located in a first-standard network, a type identifier of a second-standard network that needs to provide a service to the UE, where the first command is a service request response message, or a handover command, or any message in an air interface secure activation process; determining, by the UE, an access key according to the type identifier of the second-standard network, a key of the first-standard network, and a non-access stratum NAS count of the first-standard network by using a preset key derivation algorithm; and generating, by the UE, an access stratum AS key of the second-standard network according to the access key. The present invention can resolve problems of relatively long total communication latency and relatively high communication load of a heterogeneous network, decrease the total communication latency of a heterogeneous network and reduce the communication load of the heterogeneous network. The present invention is used for communication in a heterogeneous network.

201
After receiving a first command, user equipment UE located in a first-standard network obtains a type identifier of a second-standard network that needs to provide a service to the UE

202
The UE determines an access key according to the type identifier of the second-standard network, a key of the first-standard network, and a non-access stratum NAS count of the first-standard network by using a preset key derivation algorithm

203
The UE generates an AS key of the second-standard network according to the access key

FIG. 2

EP 3 255 914 A1

**Description**

**TECHNICAL FIELD**

The present invention relates to the communications field, and in particular, to a key generation method, device, and system.

**BACKGROUND**

With social development and technological advancement, users have higher requirements on mobile terminal access technologies. Mobile communications networks evolve constantly to satisfy the requirements of users. Currently, mobile communications networks have evolved from the second-generation mobile communications technology (English: 2rd-Generation, 2G for short) and the third-generation mobile communications technology (English: 3rd-Generation, 3G for short) to the fourth-generation mobile communications technology (English: 4rd-Generation, 4G for short). In addition, there is another widely deployed mobile communications network, that is, the Wireless Fidelity (English: Wireless-Fidelity, WiFi for short) network. A future network is a heterogeneous network (heterogeneous network) in which multiple types of mobile communications networks coexist. The heterogeneous network may include at least two of different mobile communications networks such as a WiFi network, a Global System for Mobile Communications (English: Global System for Mobile Communication, GSM for short) network, a Universal Mobile Telecommunications System (English: Universal Mobile Telecommunications System, UMTS for short) network, a General Packet Radio Service (English: General Packet Radio Service, GPRS for short) network, and a Long Term Evolution (English: Long Term Evolution, LTE for short) network.

To reduce deployment costs of operators and improve service quality received by users, an interoperation mechanism that is used when user equipment (English: User Equipment, UE for short) moves between different mobile communications networks in a heterogeneous network needs to be designed. In the prior art, when UE accesses or is handed over to any network in a heterogeneous network, the UE needs to perform a complete security authentication procedure with the network to generate a key needed by the network. For example, in a heterogeneous network including a WiFi network and an LTE network, when UE accesses the LTE network, the UE needs to perform a security authentication procedure with the LTE network to generate a key of the LTE network. When the UE is handed over from the LTE network to the WiFi network, the UE needs to perform a security authentication procedure with the WiFi network to generate a key of the WiFi network.

In the prior art, each time when UE performs network access or network handover, the UE needs to perform a complete security authentication procedure with a network that needs to service the UE, to generate a key of the network. The complete security authentication procedure includes many steps. Consequently, total communication latency of a heterogeneous network is relatively long, and communication load of the heterogeneous network is relatively high.

**SUMMARY**

To resolve the problems of relatively long total communication latency and relatively high communication load of a heterogeneous network, the present invention provides a key generation method, device, and system. The technical solutions are as follows.

Beneficial effects of the technical solutions provided in the present invention are as follows.

According to a first aspect, a key generation method is provided, where the method includes:

after receiving a first command, obtaining, by user equipment UE located in a first-standard network, a type identifier of a second-standard network that needs to provide a service to the UE, where the first command is a service request response message, or a handover command, or any message in an air interface secure activation process;
determining, by the UE, an access key according to the type identifier of the second-standard network, a key of the first-standard network, and a non-access stratum NAS count of the first-standard network by using a preset key derivation algorithm; and
generating, by the UE, an access stratum AS key of the second-standard network according to the access key.

With reference to the first aspect, in a first implementation of the first aspect, the UE and a first network device of the first-standard network share the NAS count and the key of the first-standard network.

With reference to the first aspect or the first implementation of the first aspect, in a second implementation of the first aspect, the first command includes a cipher algorithm, and

the generating, by the UE, an access stratum AS key of the second-standard network according to the access key includes:

generating, by the UE, the AS key of the second-standard network according to the cipher algorithm and the access key.

With reference to the first aspect or the first implementation of the first aspect or the second implementation of the first aspect, in a third implementation of the first aspect, the first command is a service request response message or any message in an air interface secure activation process, and before receiving the first command, the method further includes:

sending, by the UE to a second network device of the first-standard network, a service request message used to request a service, so that the second network device of the first-standard network sends second-standard network indication information to the first network device of the first-standard network according to the service request message, where the second-standard network indication information includes the type identifier of the second-standard network that needs to provide a service to the UE or an identity of the second-standard network that needs to provide a service to the UE; or

sending, to a second network device of the first-standard network, a first service request message used to request a service, so that the second network device of the first-standard network sends a second service request message to the first network device of the first-standard network according to the first service request message, where the second service request message includes the type identifier of the second-standard network that needs to provide a service to the UE or an identity of the second-standard network that needs to provide a service to the UE.

With reference to any one of the first aspect, or the first to the third implementations of the first aspect, in a fourth implementation of the first aspect, the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

According to a second aspect, a key generation method is provided, where the method includes:

after receiving a request message sent by a second network device of a first-standard network, obtaining, by a first network device of the first-standard network, a type identifier of a second-standard network that needs to provide a service to user equipment UE located in the first-standard network, where the request message is a service request message or a handover request message;

determining, by the first network device of the first-standard network, an access key according to the type identifier of the second-standard network, a key of the first-standard network, and a non-access stratum NAS count of the first-standard network by using a preset key derivation algorithm; and

sending, by the first network device of the first-standard network, the access key to a network device of the second-standard network, so that the network device of the second-standard network generates an access stratum AS key of the second-standard network according to the access key.

With reference to the second aspect, in a first implementation of the second aspect, the first network device and the UE of the first-standard network share the NAS count and the key of the first-standard network.

With reference to the second aspect or the first implementation of the second aspect, in a second implementation of the second aspect, before the obtaining a type identifier of a second-standard network that needs to provide a service to user equipment UE located in the first-standard network, the method further includes:

obtaining, by the first network device of the first-standard network, capability information of the UE, where the capability information of the UE includes a capability of the UE in the second-standard network; and

the sending, by the first network device of the first-standard network, the access key to a network device of the second-standard network, so that the network device of the second-standard network generates an access stratum AS key of the second-standard network according to the access key includes:

sending, by the first network device of the first-standard network, the capability information of the UE and the access key to the network device of the second-standard network, so that the network device of the second-standard network determines a cipher algorithm according to the capability information of the UE, and generates the AS key of the second-standard network according to the cipher algorithm and the access key.

With reference to the second aspect or the first implementation of the second aspect or the second implementation of the second aspect, in a third implementation of the second aspect, the request message includes the type identifier of the second-standard network that needs to provide a service to the UE located in the first-standard network or an identity of the second-standard network that needs to provide a service to the UE located in the first-standard network; and the obtaining a type identifier of a second-standard network that needs to provide a service to user equipment UE located in the first-standard network includes:

obtaining, by the first network device of the first-standard network, the type identifier of the second-standard network from the request message; or
determining, by the first network device of the first-standard network, the type identifier of the second-standard network according to the identity of the second-standard network.

With reference to the second aspect or the first implementation of the second aspect or the second implementation of the second aspect, in a fourth implementation of the second aspect, the obtaining a type identifier of a second-standard network that needs to provide a service to user equipment UE located in the first-standard network includes:

receiving, by the first network device of the first-standard network, second-standard network indication information sent by the second network device of the first-standard network, where the second-standard network indication information includes the type identifier of the second-standard network; or
receiving, by the first network device of the first-standard network, second-standard network indication information sent by the second network device of the first-standard network, where the second-standard network indication information includes an identity of the second-standard network; and determining, by the first network device of the first-standard network, the type identifier of the second-standard network according to the identity of the second-standard network.

With reference to any one of the second aspect, or the first to the fourth implementations of the second aspect, in a fifth implementation of the second aspect, the sending, by the first network device of the first-standard network, the access key to a network device of the second-standard network includes:

sending, by the first network device of the first-standard network, the access key to the network device of the second-standard network via the second network device of the first-standard network.

With reference to any one of the second aspect, or the first to the fifth implementations of the second aspect, in a sixth implementation of the second aspect, the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

According to a third aspect, a key generation method is provided, where the method includes:

receiving, by a network device of a second-standard network, an access key sent by a first network device of a first-standard network, where the access key is determined by the first network device of the first-standard network according to a type identifier of the second-standard network, a key of the first-standard network, and a non-access stratum NAS count of the first-standard network; and
generating, by the network device of the second-standard network, an access stratum AS key of the second-standard network according to the access key, where the UE and the first network device of the first-standard network share the NAS count and the key of the first-standard network.

With reference to the third aspect, in a first implementation of the third aspect, the generating, by the network device of the second-standard network, an access stratum AS key of the second-standard network according to the access key includes:

receiving, by the network device of the second-standard network, capability information of the UE that is sent by the first network device of the first-standard network, where the capability information of the UE includes a capability of the UE in the second-standard network;
determining, by the network device of the second-standard network, a cipher algorithm according to the capability information of the UE; and
generating, by the network device of the second-standard network, the AS key of the second-standard network according to the cipher algorithm and the access key.

With reference to the third aspect or the first implementation of the third aspect, in a second implementation of the third aspect, the receiving, by a network device of a second-standard network, an access key sent by a first network device of a first-standard network includes:

receiving, by the network device of the second-standard network, the access key that is sent by the first network device of the first-standard network via a second network device of the first-standard network.

With reference to any one of the third aspect or the first implementation of the third aspect or the second implementation of the third aspect, in a third implementation of the third aspect, the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

According to a fourth aspect, a key generation device is provided, where the key generation device is located in a first-standard network, and the key generation device includes:

an obtaining unit, configured to: after receiving a first command, obtain a type identifier of a second-standard network that needs to provide a service to the key generation device, where the first command is a service request response message, or a handover command, or any message in an air interface secure activation process;

a determining unit, configured to determine an access key according to the type identifier of the second-standard network, a key of the first-standard network, and a non-access stratum NAS count of the first-standard network by using a preset key derivation algorithm; and

a generation unit, configured to generate an access stratum AS key of the second-standard network according to the access key.

With reference to the fourth aspect, in a first implementation of the fourth aspect, the key generation device and a first network device of the first-standard network share the NAS count and the key of the first-standard network.

With reference to the fourth aspect or the first implementation of the fourth aspect, in a second implementation of the fourth aspect, the first command includes a cipher algorithm, and the generation unit is specifically configured to:

generate the AS key of the second-standard network according to the cipher algorithm and the access key.

With reference to the fourth aspect or the first implementation of the fourth aspect or the second implementation of the fourth aspect, in a third implementation of the fourth aspect, the first command is a service request response message or any message in an air interface secure activation process, and the key generation device further includes:

a sending unit, configured to:

send, to a second network device of the first-standard network, a service request message used to request a service, so that the second network device of the first-standard network sends second-standard network indication information to the first network device of the first-standard network according to the service request message, where the second-standard network indication information includes the type identifier of the second-standard network that needs to provide a service to the UE or an identity of the second-standard network that needs to provide a service to the UE; or

send, to a second network device of the first-standard network, a first service request message used to request a service, so that the second network device of the first-standard network sends a second service request message to the first network device of the first-standard network according to the first service request message, where the second service request message includes the type identifier of the second-standard network that needs to provide a service to the UE or an identity of the second-standard network that needs to provide a service to the UE.

With reference to any one of the fourth aspect, or the first to the third implementations of the fourth aspect, in a fourth implementation of the fourth aspect, the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

According to a fifth aspect, a key generation device is provided, where the key generation device is located in a first-standard network, and the key generation device includes:

an obtaining unit, configured to: after receiving a request message sent by a second network device of the first-standard network, obtain a type identifier of a second-standard network that needs to provide a service to user equipment UE located in the first-standard network, where the request message is a service request message or a handover request message;

a determining unit, configured to determine an access key according to the type identifier of the second-standard network, a key of the first-standard network, and a non-access stratum NAS count of the first-standard network by using a preset key derivation algorithm; and

a sending unit, configured to send the access key to a network device of the second-standard network, so that the network device of the second-standard network generates an access stratum AS key of the second-standard network according to the access key.

With reference to the fifth aspect, in a first implementation of the fifth aspect, the key generation device and the UE share the NAS count and the key of the first-standard network.

With reference to the fifth aspect or the first implementation of the fifth aspect, in a second implementation of the fifth aspect, the obtaining unit is further configured to obtain capability information of the UE, where the capability information of the UE includes a capability of the UE in the second-standard network; and

the sending unit is specifically configured to send the capability information of the UE and the access key to the network device of the second-standard network, so that the network device of the second-standard network determines a cipher algorithm according to the capability information of the UE, and generates the AS key of the second-standard network according to the cipher algorithm and the access key.

With reference to the fifth aspect or the first implementation of the fifth aspect or the second implementation of the fifth aspect, in a third implementation of the fifth aspect, the request message includes the type identifier of the second-standard network that needs to provide a service to the UE located in the first-standard network or an identity of the second-standard network that needs to provide a service to the UE located in the first-standard network; and the obtaining unit is specifically configured to:

obtain the type identifier of the second-standard network from the request message; or
determine the type identifier of the second-standard network according to the identity of the second-standard network.

With reference to the fifth aspect or the first implementation of the fifth aspect or the second implementation of the fifth aspect, in a fourth implementation of the fifth aspect, the obtaining unit is specifically configured to:

receive second-standard network indication information sent by the second network device of the first-standard network, where the second-standard network indication information includes the type identifier of the second-standard network; or

receive second-standard network indication information sent by the second network device of the first-standard network, where the second-standard network indication information includes an identity of the second-standard network; and determine the type identifier of the second-standard network according to the identity of the second-standard network.

With reference to any one of the fifth aspect, or the first to the fourth implementations of the fifth aspect, in a fifth implementation of the fifth aspect, the sending unit is specifically configured to:

send the access key to the network device of the second-standard network via the second network device of the first-standard network.

With reference to any one of the fifth aspect, or the first to the fifth implementations of the fifth aspect, in a sixth implementation of the fifth aspect, the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

According to a sixth aspect, a key generation device is provided, where the key generation device is located in a second-standard network, and the key generation device includes:

a receiving unit, configured to receive an access key sent by a first network device of a first-standard network, where the access key is determined by the first network device of the first-standard network according to a type identifier of the second-standard network, a key of the first-standard network, and a non-access stratum NAS count of the first-standard network; and
a generation unit, configured to generate an access stratum AS key of the second-standard network according to the access key, where

UE located in the first-standard network and the first network device of the first-standard network share the NAS count and the key of the first-standard network.

With reference to the sixth aspect, in a first implementation of the sixth aspect, the generation unit is specifically configured to:

receive capability information of the UE that is sent by the first network device of the first-standard network, where the capability information of the UE includes a capability of the UE in the second-standard network.
determine a cipher algorithm according to the capability information of the UE; and
generate the AS key of the second-standard network according to the cipher algorithm and the access key.

With reference to the sixth aspect or the first implementation of the sixth aspect, in a second implementation of the sixth aspect, the receiving unit is specifically configured to:

receive the access key that is sent by the first network device of the first-standard network via a second network device of the first-standard network.

With reference to any one of the sixth aspect or the first implementation of the sixth aspect or the second implementation of the sixth aspect, in a third implementation of the sixth aspect, the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.
According to a seventh aspect, a key generation system is provided, where the system includes:

the key generation device according to any one of the implementations of the fourth aspect; and
the key generation device according to any one of the implementations of the fifth aspect; and

With reference to the seventh aspect, in a first implementation of the seventh aspect, the key generation system further includes the key generation device according to any one of the implementations of the sixth aspect.
According to an eighth aspect, a key generation system is provided, where the system includes:

the key generation device according to any one of the implementations of the fourth aspect; and
the key generation device according to any one of the implementations of the sixth aspect.

According to a ninth aspect, a key generation system is provided, where the system includes:

the key generation device according to any one of the implementations of the third aspect; and
the key generation device according to any one of the implementations of the sixth aspect.

According to the key generation method, device, and system provided in the present invention, after determining an access key, UE can generate an AS key of a second-standard network according to the access key. Therefore, the UE can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.
It should be noted that the foregoing general description and the following detailed description are only for illustrative and explanatory purposes, and do not limit the present invention.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a network environment of a heterogeneous network to which a key generation method according to an embodiment of the present invention is applied;
FIG. 2 is a flowchart of a key generation method according to an embodiment of the present invention;

FIG. 3 is a flowchart of another key generation method according to an embodiment of the present invention;

FIG. 4 is a flowchart of another key generation method according to an embodiment of the present invention;

FIG. 5 is a flowchart of another key generation method according to an embodiment of the present invention;

FIG. 6 is a flowchart of a method of generating an access key by an MME according to the embodiment of the present invention;

FIG. 7 is a flowchart of a method of generating an AS key of a second-standard network by UE according to the embodiment of the present invention;

FIG. 8 is a flowchart of a key generation method according to an embodiment of the present invention;

FIG. 9 is a flowchart of a method of generating an access key by an MME according to the embodiment of the present invention;

FIG. 10 is a flowchart of a method of generating an AS key of a second-standard network by UE according to the embodiment of the present invention;

FIG. 11 is a schematic structural diagram of a key generation device according to an embodiment of the present invention;

FIG. 12 is a schematic structural diagram of another key generation device according to an embodiment of the present invention;

FIG. 13 is a schematic structural diagram of another key generation device according to an embodiment of the present invention;

FIG. 14 is a schematic structural diagram of another key generation device according to an embodiment of the present invention;

FIG. 15 is a schematic structural diagram of a key generation device according to an embodiment of the present invention;

FIG. 16 is a schematic structural diagram of another key generation device according to an embodiment of the present invention;

FIG. 17 is a schematic structural diagram of another key generation device according to an embodiment of the present invention; and

FIG. 18 is a schematic structural diagram of another key generation device according to an embodiment of the present invention.

Specific embodiments of the present invention have been illustrated in the foregoing accompanying drawings, and more details will be given later. These accompanying drawings and text descriptions are intended to describe concepts of the present invention for a person skilled in the art with reference to particular embodiments, rather than to limit the scope of the conceptions of the present invention by any means.

## DESCRIPTION OF EMBODIMENTS

To make the objectives, technical solutions, and advantages of the present invention clearer, the following further describes the embodiments of the present invention in detail with reference to the accompanying drawings.

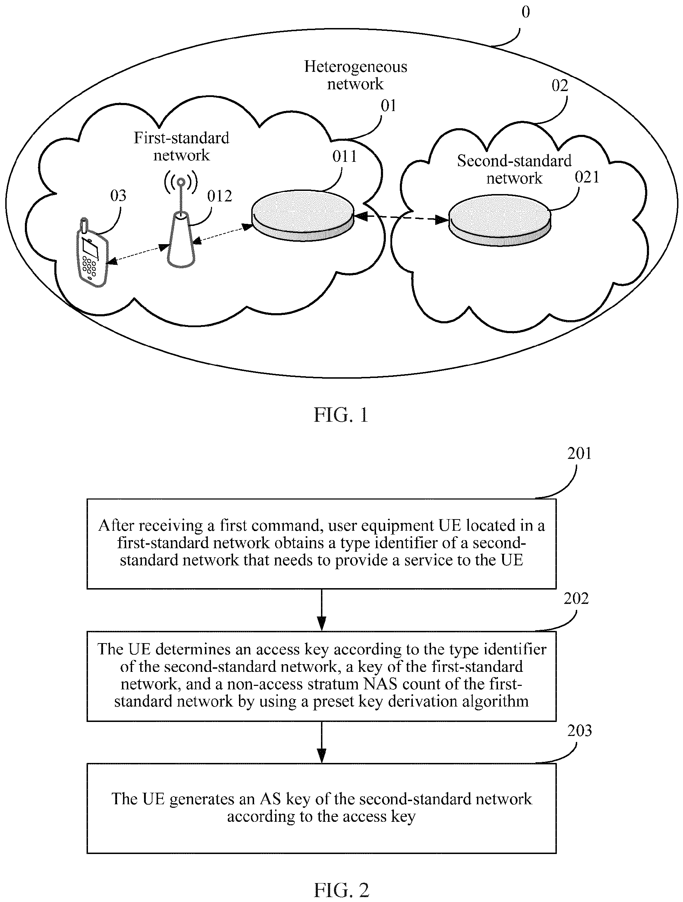

FIG. 1 provides a network environment of a heterogeneous network to which a key generation method according to an embodiment of the present invention is applied. The heterogeneous network 0 includes a first-standard network 01 and a second-standard network 02. The first-standard network 01 may include a first network device 011 of the first-standard network and a second network device 012 of the first-standard network. Normally, UE 03 located in the first-standard network 01 and the first network device 011 of the first-standard network can exchange information via the second network device 012 of the first-standard network. Optionally, the first network device 011 of the first-standard network may share a non-access stratum (English: Non-Access Stratum, NAS for short) count with the UE 03. The NAS count is a sequence number of NAS signaling. The second-standard network 02 may include at least one network device, for example, a network device 021 of the second-standard network. The network device 021 of the second-standard network may communicate with the first network device 011 of the first-standard network. For example, the network device 021 of the second-standard network may communicate with the first network device 011 of the first-standard network via the second network device 012 of the first-standard network. For another example, the network device 021 of the second-standard network may directly communicate with the first network device 011 of the first-standard network. For another example, the network device 021 of the second-standard network may communicate with the first network device 011 of the first-standard network via another network device (not shown in the figure) of the first-standard network or the second-standard network.

In the embodiments of the present invention, the first-standard network 01 may be an LTE network, or may be a next-generation (for example, 4.5G or 5G) network or a future network of another network standard. The at least one second-standard network 02 may be any one of a WiFi network, a GSM network, a UMTS network, or a GPRS network. Optionally, the first-standard network may be more evolved than the second-standard network. That is, the first-standard network appears later than the second-standard network. The first-standard network is generally backward compatible with the second-standard network. Specifically, in the embodiments of the present invention, when the first-standard network 01 is an LTE network, the first network device 011 of the first-standard network may be a mobility management entity (English: Mobility Management Entity, MME for short), and the second network device 012 of the first-standard network may be an evolved NodeB (English: Evolved Node B, eNodB for short). When the second-standard network 02 is a WiFi network, the network device 021 of the second-standard network may be a wireless access point (English: Wireless Access Point, AP for short) or an AP controller (English: AP Controller, AC for short). When the second-standard network 02 is a GSM network, a UMTS network, or a GPRS network, the network device 021 of the second-standard network may be a base station or a base station controller. This is not limited herein in the embodiments of the present invention.

The technical solutions in the embodiments of the present invention will be described with reference to the accompanying drawings in the embodiments of the present invention.

An embodiment of the present invention provides a key generation method. As shown in FIG. 2, the method may be applied to UE of a first-standard network in the heterogeneous network shown in FIG. 1. The method includes the following steps.

Step 201. After receiving a first command, the UE located in the first-standard network obtains a type identifier of a second-standard network that needs to provide a service to the UE.

The first command is a service request response message, or a handover command, or any message in an air interface secure activation process. The service request response message may be sent by a first network device of the first-standard network, to notify the UE that a service request message is received. The handover command (Handover command) may be sent by a second network device of the first-standard network, to instruct the UE to be handed over from the first-standard network to the second-standard network. The any message in the air interface secure activation process may be sent by a network device of the second-standard network, and the air interface secure activation process is used to implement negotiation and activation of an AS security context.

The first-standard network may be an LTE network, and the second-standard network may be at least one of a GSM network, a Universal Mobile Telecommunications System UMTS network, a GPRS network, or a WiFi network.

Step 202. The UE determines an access key according to the type identifier of the second-standard network, a key of the first-standard network, and a NAS count of the first-standard network by using a preset key derivation algorithm.

If the first command is a service request response message or any message in an air interface secure activation process, the NAS count may be an uplink NAS count (uplink NAS count). If the first command is a handover command, the NAS count may be a downlink NAS count (downlink NAS count). Optionally, the UE and the first network device of the first-standard network may share the NAS count and the key of the first-standard network.

Step 203. The UE generates an access stratum (English: Access Stratum, AS for short) key of the second-standard network according to the access key.

The AS key may be used to protect signaling and/or user data. For details, refer to an explanation about a security mechanism in an LTE access process, for example, in the specification 3GPP TS 33.401. It should be noted that, in this embodiment of the present invention, the access key is different from the AS key, and is a key that is needed during generation of the AS key of the second-standard network. Specifically, the access key is determined according to the type identifier of the second-standard network, the key of the first-standard network, and the NAS count of the first-standard network by using the preset key derivation algorithm.

In conclusion, according to the key generation method provided in this embodiment of the present invention, after determining an access key by using NAS information, UE can generate an AS key of a second-standard network according to the access key. Therefore, the UE can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

For example, the first command in step 201 may include a cipher algorithm. In this case, step 203 may include: generating, by the UE, the AS key of the second-standard network according to the cipher algorithm and the access key.

Further, if the first command is a service request response message or any message in an air interface secure activation process, before step 201, the method may further include:

sending, by the UE to the second network device of the first-standard network, a service request message used to request a service, so that the second network device of the first-standard network sends second-standard network indication information to the first network device of the first-standard network according to the service request message, where the second-standard network indication information includes the type identifier of the second-standard network that needs to provide a service to the UE or an identity of the second-standard network that needs to provide a service to the UE; or sending, to the second network device of the first-standard network, a first service request message used to request a service, so that the second network device of the first-standard network sends a second service request message to the first network device of the first-standard network according to the first service request message, where the second service request message includes the type identifier of the second-standard network that needs to provide a service to the UE or an identity of the second-standard network that needs to provide a service to the UE.

In conclusion, according to the key generation method provided in this embodiment of the present invention, after determining an access key by using NAS information, UE can generate an AS key of a second-standard network according to the access key. Therefore, the UE can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

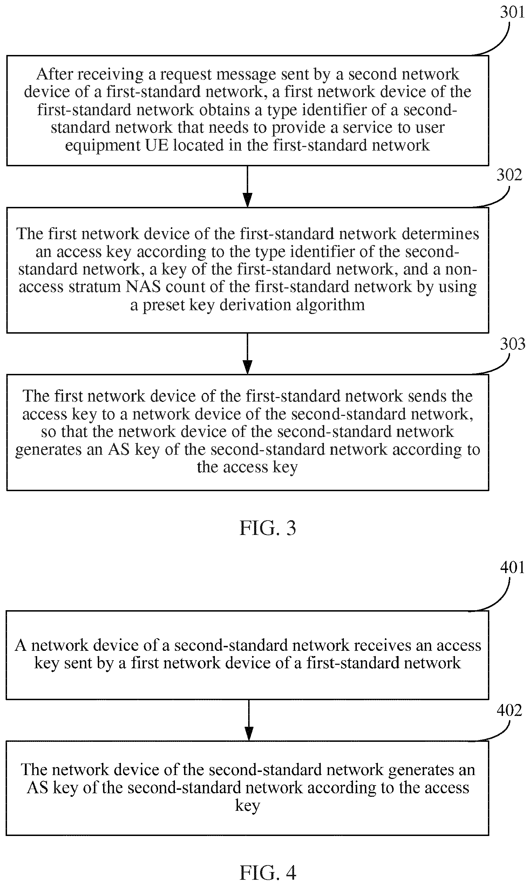

The present invention provides a key generation method. As shown in FIG. 3, the method is applied to a first network device of a first-standard network in the heterogeneous network shown in FIG. 1. The method includes the following steps.

Step 301. After receiving a request message sent by a second network device of the first-standard network, the first network device of the first-standard network obtains a type identifier of a second-standard network that needs to provide a service to UE located in the first-standard network.

The request message may be a service request (Service Request) message or a handover request message.

Step 302. The first network device of the first-standard network determines an access key according to the type identifier of the second-standard network, a key of the first-standard network, and a NAS count of the first-standard network by using a preset key derivation algorithm.

If the request message is a service request message, the NAS count is an uplink NAS count. If the request message is a handover request message, the NAS count is a downlink NAS count.

Step 303. The first network device of the first-standard network sends the access key to a network device of the second-standard network, so that the network device of the second-standard network generates an AS key of the second-standard network according to the access key.

Optionally, the first network device of the first-standard network and the UE located in the first-standard network share the NAS count and the key of the first-standard network.

In conclusion, according to the key generation method provided in this embodiment of the present invention, after determining an access key by using NAS information, a first network device of a first-standard network sends the access key to a network device in a second-standard network, so that the network device can generate an AS key of the second-standard network according to the access key. Therefore, the network device in the second-standard network can generate the AS key of the second-standard network by using a key and the NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

Specially, before the step of obtaining a type identifier of a second-standard network that needs to provide a service to UE located in the first-standard network in step 301, the method further includes: obtaining, by the first network device of the first-standard network, capability information of the UE, where the capability information of the UE includes a capability of the UE in the second-standard network. Correspondingly, step 303 includes:

sending, by the first network device of the first-standard network, the capability information of the UE and the access key to the network device of the second-standard network, so that the network device of the second-standard network determines a cipher algorithm according to the capability information of the UE, and generates the AS key of the second-standard network according to the cipher algorithm and the access key.

It should be noted that there may be multiple methods for obtaining the type identifier of the second-standard network in step 301. The present invention schematically provides the following several methods.

In one aspect, the request message includes the type identifier of the second-standard network that needs to provide a service to the UE or an identity of the second-standard network that needs to provide a service to the UE; and the obtaining a type identifier of a second-standard network that needs to provide a service to UE located in the first-standard network includes:

obtaining, by the first network device of the first-standard network from the request message, the type identifier of the second-standard network that needs to provide a service to the UE located in the first-standard network; or determining, by the first network device of the first-standard network according to the identity of the second-standard network that needs to provide a service to the UE, the type identifier of the second-standard network that needs to provide a service to the UE located in the first-standard network.

In another aspect, the obtaining a type identifier of a second-standard network that needs to provide a service to UE located in the first-standard network includes: receiving, by the first network device of the first-standard network, second-standard network indication information sent by the second network device of the first-standard network, where the second-standard network indication information includes the type identifier of the second-standard network that needs to provide a service to the UE located in the first-standard network; or receiving, by the first network device of the first-standard network, second-standard network indication information sent by the second network device of the first-standard network, where the second-standard network indication information includes an identity of the second-standard network that needs to provide a service to the UE located in the first-standard network; and determining, by the first network device of the first-standard network according to the identity of the second-standard network that needs to provide a service to the UE, the type identifier of the second-standard network that needs to provide a service to the UE located in the first-standard network.

Further, in step 303, the sending, by the first network device of the first-standard network, the access key to a network device of the second-standard network includes:

sending, by the first network device of the first-standard network, the access key to the network device of the second-standard network via the second network device of the first-standard network.

In this embodiment of the present invention, the first-standard network is a Long Term Evolution LTE network, and the second-standard network is at least one of a GSM network, a UMTS network, a GPRS network, or a WiFi network.

Optionally, before step 301, the method further includes: obtaining, by the first network device of the first-standard network, a NAS security context (Security Context). The NAS security context includes at least a preset network key and a NAS count. The NAS security context obtained by the first network device of the first-standard network is the same as a NAS security context stored by the UE.

In conclusion, according to the key generation method provided in this embodiment of the present invention, after determining an access key by using NAS information, a first network device of a first-standard network sends the access key to a network device in a second-standard network, so that the network device can generate an AS key of the second-standard network according to the access key. Therefore, the network device in the second-standard network can generate the AS key of the second-standard network by using a key and the NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

An embodiment of the present invention provides a key generation method. As shown in FIG. 4, the method may be applied to a network device of a second-standard network in the heterogeneous network shown in FIG. 1. The method includes the following steps.

Step 401. The network device of the second-standard network receives an access key sent by a first network device of a first-standard network.

The access key is determined by the first network device of the first-standard network according to a type identifier of the second-standard network and a key and a NAS count of the first-standard network.

For example, the network device of the second-standard network may receive an access key that is sent by the first network device of the first-standard network via a second network device of the first-standard network.

Step 402. The network device of the second-standard network generates an AS key of the second-standard network according to the access key.

The UE and the first network device of the first-standard network share the NAS count and the key of the first-standard network.

In conclusion, according to the key generation method provided in this embodiment of the present invention, after receiving an access key sent by a first network device of a first-standard network, a network device of a second-standard network generates an access stratum AS key of the second-standard network according to the access key. The access key is determined by the first network device of the first-standard network according to a type identifier of the second-standard network and a key and a NAS count of the first-standard network. That is, the network device in the second-standard network can generate the AS key of the second-standard network by using the key and NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

In step 402, the generating, by the network device of the second-standard network, an AS key of the second-standard network according to the access key includes:

receiving, by the network device of the second-standard network, capability information of UE that is sent by the first network device of the first-standard network, where the capability information of the UE includes a capability of the UE in the second-standard network; determining, by the network device of the second-standard network, a cipher algorithm according to the capability information of the UE; and generating, by the network device of the second-standard network, the AS key of the second-standard network according to the cipher algorithm and the access key.

Optionally, the first-standard network may be an LTE network, and the second-standard network may be at least one of a GSM network, a UMTS network, a GPRS network, or a WiFi network.

In conclusion, according to the key generation method provided in this embodiment of the present invention, after receiving an access key sent by a first network device of a first-standard network, a network device of a second-standard network generates an access stratum AS key of the second-standard network according to the access key. The access key is determined by the first network device of the first-standard network according to a type identifier of the second-standard network and a key and a NAS count of the first-standard network. That is, the network device in the second-standard network can generate the AS key of the second-standard network by using the key and NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

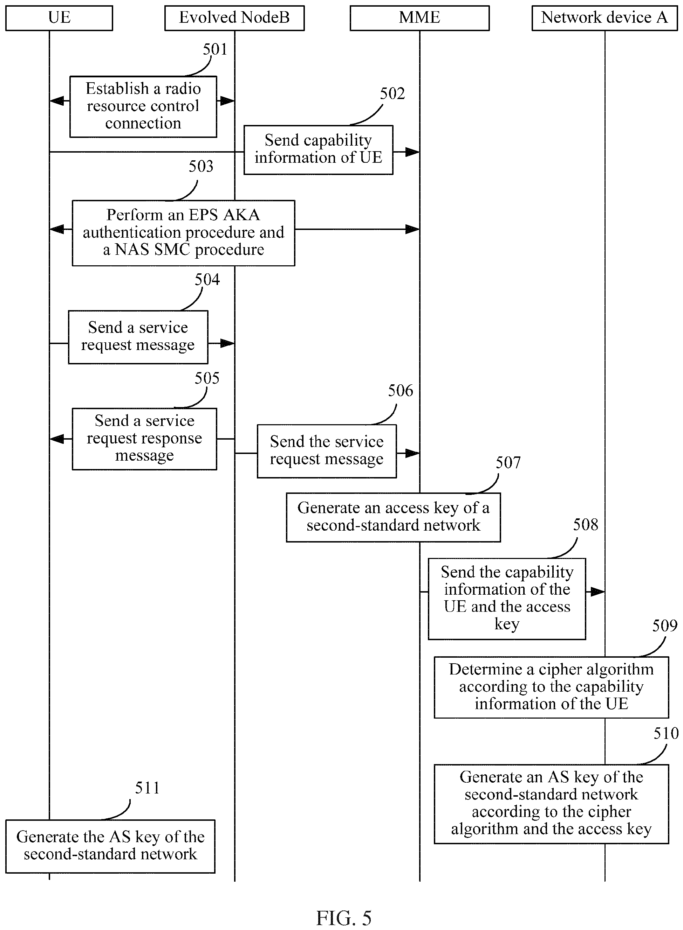

In a heterogeneous network, when UE located in a first-standard network requests a service from a second network device in the first-standard network or the second network device in the first-standard network determines that network handover needs to be performed for the UE, an AS key needs to be generated. In one aspect, in an embodiment of the present invention, an example in which UE requests a service of a second-standard network (that is, the UE accesses the second-standard network) is used for description. In this case, a request message is a service request message, and a first command is a service request response message or any message in an air interface secure activation process. If the first-standard network is an LTE network, an access device of the first-standard network is a mobility management entity (English: Mobility Management Entity, MME for short), and the second network device in the first-standard network in this embodiment is an evolved NodeB in the LTE network. As shown in FIG. 5, in this embodiment of the present invention, it is assumed that a network device that is in the second-standard network and that needs to provide a service to the UE is a network device A. A key generation method provided in this embodiment of the present invention includes the following steps.

Step 501. The UE and the evolved NodeB establish a radio resource control (English: Radio Resource Control, RRC for short) connection.

For example, the UE may send a connection establishment request message to the evolved NodeB. The evolved NodeB generates a corresponding connection establishment response message according to the connection establishment request message, and sends the connection establishment response message to the UE. After receiving the connection establishment response message, the UE sends a connection establishment acknowledgement message to the evolved NodeB, and an RRC connection is established between the UE and the evolved NodeB.

Step 502. The UE sends capability information of the UE to an MME.

The capability information of the UE includes a capability of the UE in a second-standard network. For example, the UE may send the capability information of the UE to the MME by using a NAS message in an attach (attach) procedure.

The capability information of the UE includes the capability of the UE in the second-standard network. The capability refers to an algorithm supported by the UE in the second-standard network. There is at least one such algorithm. For example, the capability of the UE may be shown in Table 1. When the second-standard network is a WiFi network, an algorithm supported by the UE is L3, and a capability of the UE in the WiFi network is L3. When the second-standard network is a GSM network, algorithms supported by the UE are L1 and L5, and capabilities of the UE in the GSM network are L1 and L5. When the second-standard network is a UMTS network, algorithms supported by the UE are L2 and L4, and capabilities of the UE in the UMTS network are L2 and L4. When the second-standard network is a GPRS network, an algorithm supported by the UE is L4, and a capability of the UE in the GPRS network is L4.

**Table 1**

| Network type | WiFi network | GSM network | UMTS network | GPRS network |
|---|---|---|---|---|
| Algorithm | L3 | L1 | L2 | L4 |
|  |  | L5 | L4 |  |

It should be noted that, a NAS security context may further include Knas.int (an integrity protection key) or Knas.enc (a decryption key). Knas.int is used to protect integrity of NAS signaling messages between the UE and the MME, and Knas.enc is used to protect confidentiality of NAS signaling messages between the UE and the MME.

Step 503. The UE and the MME perform an evolved packet system (English: Evolved Packet System, EPS for short) AKA authentication procedure and a NAS security mode command (English: Security Mode Command, SMC for short) procedure.

For the EPS AKA procedure, refer to the 3GPP TS 33.401 protocol. In the protocol, a challenge-response mechanism is used to complete identity authentication and key agreement between a user and a network, and a communication encryption key is agreed on based on the identity authentication. The AKA authentication procedure in this embodiment of the present invention is based on the protocol. For example, the MME obtains an authentication vector {RAND, AUTN, XRES, Kasme} from an HSS (Home Subscription Server). The RAND is a random number, the AUTN is an authentication token, the XRES is an expected response, and the Kasme is a preset network key. The MME sends the RAND and the AUTN to the UE. The UE checks whether the AUTN is correct, to complete authentication on a network. If the AUTN is correct, the UE calculates a response (English: response, RES for short) according to the RAND, and sends the RES to the MME. The MME checks whether the RES received from the UE is the same as the expected response (English: expect response, XRES for short) in the authentication vector. If the RES is the same as the XRES, the UE is successfully authenticated. After the EPS AKA authentication procedure is completed, the preset network key Kasme is shared between the UE and the MME.

After the EPS AKA authentication succeeds, the NAS SMC security mode command procedure is performed between the UE and the MME, to negotiate and activate the NAS security context. After the NAS SMC procedure is completed, the UE and the MME share the NAS security context. The security context refers to a set of security related parameters.

In this embodiment of the present invention, the NAS security context includes at least a preset network key and a NAS count. A NAS security context obtained by the MME is the same as a NAS security context stored by the UE. It can be known according to the 3GPP TS33.401 protocol that the preset network key is the Kasme, and the NAS count may be an uplink NAS count or a downlink NAS count.

Step 504. The UE sends a service request message to the evolved NodeB.

The service request message is used to request a service from the evolved NodeB. Security protection is performed by using the NAS security context. That is, integrity protection is performed by using Knas.int. When the UE requires a corresponding network to provide a service, the UE may send a service request message to the evolved NodeB to request the service.

Step 505. The evolved NodeB sends a service request response message to the UE.

Optionally, after receiving the service request message, the evolved NodeB may specify, for the UE, a second-standard network that provides a service to the UE and a serving device in the network, generate a corresponding service response message, and send the service response message to the UE. The service response message is used to notify the UE that the service request message is received and notify the UE of a type of the network that provides a service to the UE. In actual application, the evolved NodeB may, alternatively, not send the service request response message to the UE.

Step 506. The evolved NodeB sends the service request message of the UE to the MME.

It should be noted that the evolved NodeB may directly send, to the MME without processing, the service request message sent by the UE, or may process the service request message, for example, adding a type identifier of the second-standard network that needs to provide a service to the UE located in the first-standard network or an identity of the second-standard network that needs to provide a service to the UE located in the first-standard network. If the evolved NodeB processes the service request message, in this embodiment of the present invention, the service request message sent by the UE is considered as a first service request message, and the first service request message that has been processed by the evolved NodeB is considered as a second service request message.

Step 507. The MME generates an access key of a second-standard network.

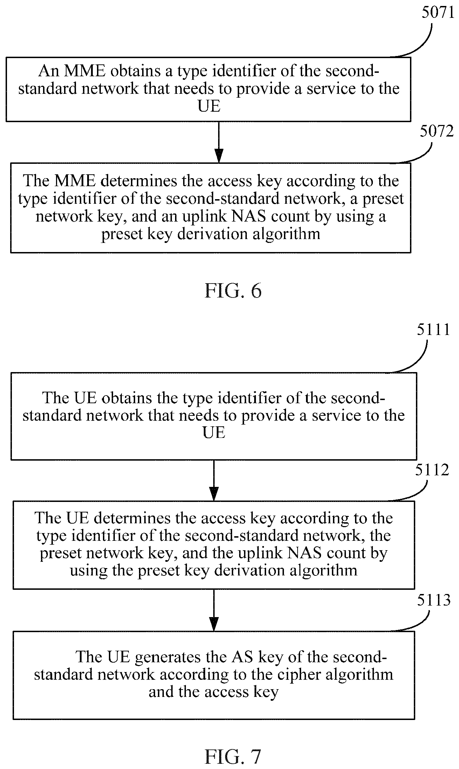

Specifically, as shown in FIG. 6, a method of generating the access key by the MME may include the following steps.

Step 5071. The MME obtains a type identifier of the second-standard network that needs to provide a service to the UE located in a first-standard network.

In one aspect, in step 506, when the evolved NodeB sends the service request message of the UE to the MME, the evolved NodeB may add, to the service request message, the type identifier of the second-standard network that needs to provide a service to the UE or the identity of the second-standard network that needs to provide a service to the UE. The type identifier of the second-standard network that needs to provide a service to the UE is used to indicate a type of the second-standard network that needs to provide a service to the UE. The type is, for example, a WiFi type, a GSM type, a UMTS type, or a GPRS type. The identity of the second-standard network that needs to provide a service to the UE is used to uniquely identify an identity of the second-standard network that needs to provide a service to the UE. The MME may obtain, from the service request message, the type identifier of the second-standard network that needs to provide a service to the UE or the identity of the second-standard network that needs to provide a service to the UE or an identity of a network device A that needs to provide a service to the UE. If the identity of the network device A is obtained, a type identifier of a network in which the network device A is located is determined as the type identifier of the second-standard network that needs to provide a service to the UE. If the identity of the second-standard network that needs to provide a service to the UE is obtained, the type identifier of the second-standard network that needs to provide a service to the UE may be determined according to the identity of the second-standard network that needs to provide a service to the UE. In this embodiment of the present invention, the type identifier of the second-standard network that needs to provide a service to the UE or the identity of the second-standard network that needs to provide a service to the UE is added to the service request message, so that a new message does not need to be generated. Therefore, a quantity of messages can be reduced, and network load can be decreased.

In a second aspect, after receiving the service request message, the evolved NodeB may generate second-standard network indication information, and then send the second-standard network indication information to the MME. The second-standard network indication information may include the type identifier of the second-standard network that needs to provide a service to the UE or the identity of the second-standard network that needs to provide a service to the UE or an identity of a network device A that needs to provide a service to the UE. After the MME receives the second-standard network indication information, when the second-standard network indication information includes the type identifier of the second-standard network that needs to provide a service to the UE, the MME may directly obtain, from the second-standard network indication information, the type identifier of the second-standard network that needs to provide a service to the UE. When the second-standard network indication information includes the identity of the second-standard network that needs to provide a service to the UE, the MME may directly obtain, from the second-standard network indication information, the identity of the second-standard network that needs to provide a service to the UE, and determine, according to the identity of the second-standard network that needs to provide a service to the UE, the type identifier of the second-standard network that needs to provide a service to the UE. When the second-standard network indication information includes the identity of the network device A, the MME determines a type identifier of a network in which the network device B is located as the type identifier of the second-standard network that needs to provide a service to the UE.

Step 5072. The MME determines the access key according to the type identifier of the second-standard network, a preset network key, and an uplink NAS count by using a preset key derivation algorithm.

For example, the MME may obtain, by using a key calculation formula, the access key according to a related parameter in the NAS security context obtained in step 502. The key calculation formula is:

$$K = KDF(\text{uplink NAS count}, Kasme, X),$$

where
K is the access key, "uplink NAS count" is the uplink NAS count, Kasme is the preset network key, X is the type identifier of the second-standard network, indicating that the second-standard network may be any one of a WiFi network, a GSM network, a UMTS network, or a GPRS network, and KDF indicates the preset key derivation algorithm, for example, an HMAC-SHA256 algorithm. It should be noted that, a derivation process of the key K may include not only the parameters "uplink NAS count", "Kasme", and "X", but also another parameter.

Step 508. The MME sends the capability information of the UE and the access key to a network device A in the second-standard network.

In a first aspect, the MME sends the capability information of the UE and the access key to the evolved NodeB. In step 505, the network device that is in the second-standard network providing a service to the UE is specified by the evolved NodeB. Therefore, the evolved NodeB can obtain an address or the identity of the network device A in the second-standard network, and may forward the capability information of the UE and the access key to the network device A in the second-standard network according to the address or the identity of the network device.

In a second aspect, if the MME obtains the identity of the network device A, the MME may directly send the capability information of the UE and the access key to the network device A according to the identity of the network device A.

Step 509. The network device A determines a cipher algorithm according to the capability information of the UE.

The network device A locally saves an algorithm list. The algorithm list records various cipher algorithms supported by the second-standard network, and these cipher algorithms are arranged according to priorities in ascending order or descending order. When obtaining a cipher algorithm for the second-standard network, the network device A may perform matching between a capability of the UE in the second-standard network and the algorithm list to obtain cipher algorithms that are in the algorithm list and for which capabilities are the same as the capability of the UE in the second-standard network, and then obtain, from these algorithms, an algorithm having a highest priority as a cipher algorithm selected for the second-standard network. For example, a network device of a GSM network supports cipher algorithms A5/1, A5/3, and A5/4 (A5/1, A5/3, and A5/4 are three A5 algorithms. The A5 algorithm is a sequence cipher and is an encryption algorithm specified in the European GSM standard. The A5 algorithm is used for encryption in digital cellular mobile telephony and is used to encrypt a link from user equipment to a base station). A network device of a UMTS network supports cipher algorithms SNOW 3G and Kasumi. A network device of a GPRS network supports cipher algorithms GEA3 and GEA4. A network device of a WiFi network supports a cipher algorithm AES (AES is a 21st-century encryption standard defined by the US National Institute of Standards and Technology NIST to replace DES). Assuming that the second-standard network is a GSM network, capabilities of the UE in the GSM network that are obtained by the network device A are L1 and L5. It is assumed that an algorithm list of the GSM network is shown in Table 2, and cipher algorithms in Table 2 are arranged according to priorities in descending order, and are sequentially L1, L4, L5, and L2. Cipher algorithms that are in the algorithm list of the GSM network for which capabilities are the same as the capability of the LIE in the GSM network and that are obtained by the network device A by means of matching between the capability of the UE in the GSM network and the algorithm list of the GSM network are L1 and L5. The network device A then obtains, according to Table 2, an algorithm L1 having a highest priority from these algorithms. In this case, the network device A may determine L1 as an eventual cipher algorithm.

**Table 2**

| Network type | GSM network |
|---|---|
| Algorithm | L1 |
| | L4 |
| | L5 |
| | L2 |

Step 510. The network device A generates an AS key of the second-standard network according to the cipher algorithm and the access key.

For different second-standard networks that the network device A is located in, cipher algorithms corresponding to the network device A are different. In this embodiment of the present invention, it is assumed that a cipher algorithm selected by a network device of a GSM network is L1, a cipher algorithm selected by a network device of a UMTS network is L2, and a cipher algorithm selected by a network device of a WiFi network is L3. For example, when the second-standard network is a GSM network, a calculation formula for calculating the AS key is:

$$Kc = KDF(K, L1, "GSM"),$$

where
Kc is the AS key in the GSM network, K is an access key, L1 is an algorithm identifier corresponding to a cipher algorithm selected according to a capability of the UE, "GSM" indicates that the second-standard network is a GSM network, and KDF indicates that the algorithm corresponding to L1 is used.

When the second-standard network is a UMTS network, a calculation formula for calculating the AS key is:

$$CK/IK = KDF(K, L2, "UMTS"),$$

where
CK/IK is the AS key in the UMTS network, K is an access key, L2 is an algorithm identifier corresponding to a cipher algorithm (an encryption algorithm or an integrity protection algorithm) selected according to a capability of the UE, a type identifier "UMTS" indicates that the second-standard network is a UMTS network, and KDF indicates that the algorithm corresponding to L2 is used.

When the second-standard network is a WiFi network, a calculation formula for calculating the AS key is:

$$PMK = KDF(K, L3, "WiFi"),$$

where

PMK is the AS key in the WiFi network, K is an access key, L3 is an algorithm identifier corresponding to a cipher algorithm selected according to a capability of the UE, "WiFi network" indicates that the second-standard network is a WiFi network, and KDF indicates that the algorithm corresponding to L3 is used.

It should be noted that, after both the UE and the network device A generate the AS key of the second-standard network, the UE and the network device A may perform an air interface secure activation process by using the generated key, to complete negotiation and activation of an AS security context, for example, perform a cipher mode command (Cipher Mode Command) procedure in a GSM network, a security mode command (Security Mode Command) procedure in a UMTS network, or a 4-way handshake (4-way handshake) procedure in a WiFi network.

Step 511. The UE generates the AS key of the second-standard network.

For example, as shown in FIG. 7, a process in which the UE generates the AS key of the second-standard network may include the following steps.

Step 5111. The UE obtains the type identifier of the second-standard network that needs to provide a service to the UE.

If step 505 is performed, in step 505, the evolved NodeB may determine, according to multiple conditions such as a current network status and communication quality of the heterogeneous network, a network that can provide a service to the UE, and send a type identifier of the network to the UE by using a service response message. Therefore, the UE may extract the type identifier of the network from the service response message, and determine the second-standard network according to the type identifier. The second-standard network may be any one of a WiFi network, a GSM network, a UMTS network, or a GPRS network.

If step 505 is not performed, the UE may obtain the type identifier of the second-standard network from signaling that is sent by the MME in an air interface secure activation process.

Step 5112. The UE determines the access key according to the type identifier of the second-standard network, the preset network key, and the uplink NAS count by using the preset key derivation algorithm.

For example, the UE may obtain, by using a key calculation formula, the access key according to a related parameter in the NAS security context obtained in step 502. The key calculation formula is:

$$K = KDF(uplink\ NAS\ count, Kasme, X),$$

where

K is the access key, "uplink NAS count" is the uplink NAS count, Kasme is the preset network key, X is the type identifier of the second-standard network, where the second-standard network may be any one of a WiFi network, a GSM network, a UMTS network, or a GPRS network, and KDF indicates the preset key derivation algorithm, where the key derivation algorithm is the same as the key derivation algorithm used by the MME in step 507, for example, an HMAC-SHA256 algorithm.

Step 5113. The UE generates the AS key of the second-standard network according to the cipher algorithm and the access key.

The cipher algorithm is determined by the network device A according to the capability information of the UE in step 509. After selecting the cipher algorithm, the network device A sends the cipher algorithm to the UE. Normally, the network device A may add the cipher algorithm to a service request response message or any message in an air interface secure activation process, and the UE may obtain the cipher algorithm by parsing the corresponding message.

AS key calculation methods corresponding to different second-standard networks are different. In this embodiment of the present invention, it is assumed that a cipher algorithm selected by a network device of a GSM network is L1, a cipher algorithm selected by a network device of a UMTS network is L2, and a cipher algorithm selected by a network device of a WiFi network is L3. For example, when the second-standard network is a GSM network, a calculation formula for calculating the AS key is:

$$Kc = KDF(K, L1, "GSM"),$$

where
Kc is the AS key in the GSM network, K is an access key, L1 is an algorithm identifier corresponding to a cipher algorithm selected by the network device A according to a capability of the UE, "GSM" indicates that the second-standard network is a GSM network, and KDF indicates that the algorithm corresponding to L1 is used.

When the second-standard network is a UMTS network, a calculation formula for calculating the AS key is:

$$CK/IK = KDF(K, L2, "UMTS"),$$

where
CK/IK is the AS key in the UMTS network, K is an access key, L2 is an algorithm identifier corresponding to a cipher algorithm (an encryption algorithm or an integrity protection algorithm) selected by the network device A according to a capability of the UE, a type identifier "UMTS" indicates that the second-standard network is a UMTS network, and KDF indicates that the algorithm corresponding to L2 is used.

When the second-standard network is a WiFi network, a calculation formula for calculating the AS key is:

$$PMK = KDF(K, L3, "WiFi"),$$

where
PMK is the AS key in the WiFi network, K is an access key, L3 is an algorithm identifier corresponding to a cipher algorithm selected by the network device A according to a capability of the UE, "WiFi network" indicates that the second-standard network is a WiFi network, and KDF indicates that the algorithm corresponding to L3 is used.

Specially, a sequential order of the steps of the key generation method provided in this embodiment of the present invention may be adjusted where appropriate, or a step may be correspondingly added or omitted according to a situation. For example, step 505 may be an optional step. In addition, for example, step 505 and step 506 may be performed after step 507 or step 508, and step 5111 to step 5113 may be performed before step 506. In addition, after step 510, the network device A performs an AS security context activation process with the UE. By using the AS security context activation procedure, the UE may obtain the type identifier of the second-standard network. A derivation process of the AS key on the UE side in step 501 and the AS security context activation procedure after step 510 may be simultaneously performed. Variants of the method can be easily perceived by any person skilled in the art within the technical scope disclosed in the present invention. Such variants shall fall within the protection scope of the present invention, and are therefore not further described.

In the prior art, in a heterogeneous network including at least two of networks such as a 2G GSM network, a GPRS network, a 3G UMTS network, or a 4G LTE network, an AS and a NAS are coupled. That is, NAS signaling of a network can be used together with only AS signaling of the network, and NAS signaling of a network cannot be used to generate AS signaling of another network. To improve performance of the network and to enable independent evolution of NAS signaling and AS signaling, NAS signaling and AS signaling need to be decoupled so that NAS signaling of a network and AS signaling of another network can be used together. However, in an existing solution, in terms of security authentication, keys used to protect AS signaling in various networks are all generated by using NAS signaling procedures corresponding to the networks. For example, a GSM network and a GPRS network need to generate an encryption key (English: key encryption, Kc for short) according to the GSM Authentication and Key Agreement (English: GSM Authentication and Key Agreement, AKA for short) protocol, determine an encryption algorithm by using a Cipher Mode Command (English: Cipher Mode Command, CMC for short) procedure or a GSM AKA procedure, and activate the encryption algorithm. A UMTS network needs to generate a cipher key (English: Cipher Key, CK for short) and an integrity key IK (English: Integrity Key, IK for short) according to the UMTS AKA protocol, determine an encryption algorithm and an integrity protection algorithm by using an SMC procedure, and activate these algorithms.

In this embodiment of the present invention, a NAS count is a sequence number of NAS signaling. A first network device of a first-standard network may generate an access key according to a type identifier of a second-standard network, a preset network key, and a NAS count. A network device of the second-standard network may determine a cipher algorithm according to capability information of UE that is sent by the first network device of the first-standard network, and generate an AS key of the second-standard network according to the cipher algorithm and the access key. This indicates that NAS signaling in the first-standard network can be used for generation of the AS key in the second-standard network. The AS key is a security key in AS signaling. Therefore, NAS signaling and AS signaling are decoupled in terms of security authentication.

In conclusion, according to the key generation method provided in this embodiment of the present invention, after determining an access key according to NAS information, a first network device of a first-standard network sends the access key to a network device in a second-standard network, so that the network device can generate an AS key of the second-standard network according to the access key. Therefore, the network device in the second-standard network can generate the AS key of the second-standard network by using a key and the NAS information of the first-standard network. This not only avoids a security authentication procedure performed before the AS key of the second-standard network is generated in the prior art, but also ensures security. Correspondingly, total communication latency of a heterogeneous network is decreased, communication load of the heterogeneous network is reduced, and NAS signaling and AS signaling are decoupled in terms of security authentication.

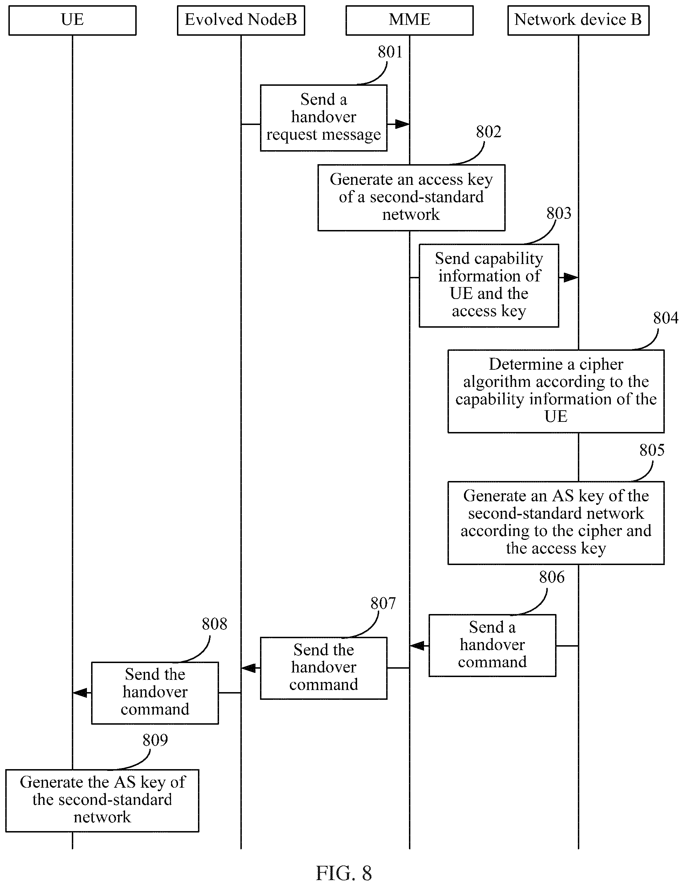

In another aspect, an example in which network handover is performed on UE located in a first-standard network is used for description in an embodiment of the present invention. It is assumed that the UE is handed over from the first-standard network to a second-standard network. In this case, a request message is a handover request message, and a first command is a handover command. Assuming that the first-standard network is an LTE network, an access device of the first-standard network is an MME. A second network device in the first-standard network in this embodiment is an evolved NodeB in the LTE network. As shown in FIG. 8, in this embodiment of the present invention, it is assumed that a network device that is in the second-standard network and that needs to provide a service to the UE is a network device B, and a key generation method provided in this embodiment of the present invention includes the following steps.

Step 801. An evolved NodeB sends a handover request message to an MME.

The evolved NodeB may monitor a status of UE and a local status of the evolved NodeB in real time. When the UE moves outside a preset cell range, or load of the evolved NodeB is excessively high, the UE or a part of data traffic of the UE needs to be handed over to a network of another standard, to relieve the load of the evolved NodeB. In this case, the evolved NodeB sends a handover request message to the MME.

Step 802. The MME generates an access key of a second-standard network.

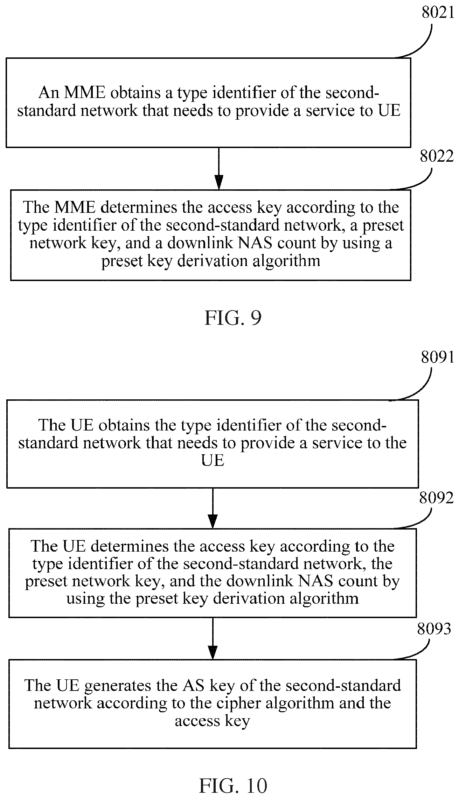

Specifically, as shown in FIG. 9, a method of generating the access key by the MME includes the following steps.

Step 8021. The MME obtains a type identifier of the second-standard network that needs to provide a service to UE.

In a first aspect, in step 801, when sending the handover request message to the MME, the evolved NodeB may add, to the handover request message, the type identifier of the second-standard network that needs to provide a service to the UE or an identity of a network device B that needs to provide a service to the UE. The MME may obtain, from the handover request message, the type identifier of the second-standard network that needs to provide a service to the UE or the identity of the network device B that needs to provide a service to the UE or an identity of the second-standard network that needs to provide a service to the UE. If the identity of the network device B is obtained, a type identifier of a network in which the network device B is located is determined as the type identifier of the second-standard network that needs to provide a service to the UE. If the identity of the second-standard network that needs to provide a service to the UE is obtained, the type identifier of the second-standard network that needs to provide a service to the UE may be determined according to the identity of the second-standard network.

In a second aspect, the evolved NodeB may generate second-standard network indication information, and send the second-standard network indication information to the MME. The second-standard network indication information may include the type identifier of the second-standard network that needs to provide a service to the UE or an identity of the second-standard network that needs to provide a service to the UE or an identity of a network device B that needs to provide a service to the UE. After the MME receives the second-standard network indication information, when the second-standard network indication information includes the type identifier of the second-standard network that needs to provide a service to the UE, the MME may directly obtain, from the second-standard network indication information, the type identifier of the second-standard network that needs to provide a service to the UE. When the second-standard network indication information includes the identity of the second-standard network that needs to provide a service to the UE, the MME may directly obtain, from the second-standard network indication information, the identity of the second-standard network that needs to provide a service to the UE, and determine, according to the identity of the second-standard network, the type identifier of the second-standard network that needs to provide a service to the UE. When the second-standard network indication information includes the identity of the network device A, the MME determines a type identifier of a network in which the network device B is located as the type identifier of the second-standard network that needs to provide a service to the UE.

Step 8022. The MME determines the access key according to the type identifier of the second-standard network, a preset network key, and a downlink NAS count by using a preset key derivation algorithm.

When the UE requests a service, the UE and the MME need to perform an AKA authentication procedure and a NAS SMC procedure, to implement sharing of a NAS security context between the UE and the MME. For specific steps, refer to step 503 in the foregoing embodiment. Therefore, in this case, the MME has obtained the NAS security context. In this embodiment of the present invention, the NAS security context includes at least the preset network key and the NAS count. The NAS security context obtained by the MME is the same as a NAS security context stored by the UE.

For example, the MME may obtain the access key according to a related parameter in the security context by using a key calculation formula. The key calculation formula is:

$$K = KDF(\text{downlink NAS count}, Kasme, X),$$

where

K is the access key, "downlink NAS count" is the downlink NAS count, Kasme is the preset network key, X is the type identifier of the second-standard network, where the second-standard network may be any one of a WiFi network, a GSM network, a UMTS network, or a GPRS network, and KDF indicates the preset key derivation algorithm, for example, an HMAC-SHA256 algorithm. It should be noted that, a derivation process of the key K may include not only the parameters "downlink NAS count", "Kasme", and "X", but also another parameter.

Step 803. The MME sends capability information of the UE and the access key to a network device B in the second-standard network.

In a first aspect, the MME sends the capability information of the UE and the access key to the evolved NodeB. Because in step 801, the evolved NodeB sends the handover request message to the MME, the evolved NodeB specifies a new network device that provides a service to the UE, that is, a target device to which the UE is to be handed over. Therefore, the evolved NodeB can obtain an address or the identity of the network device B in the second-standard network, and may forward the capability information of the UE and the access key to the network device B in the second-standard network according to the address or the identity of the network device.

In a second aspect, if the MME obtains the identity of the network device B, the MME sends the capability information of the UE and the access key to the network device B according to the identity of the network device B.

Step 804. The network device B determines a cipher algorithm according to the capability information of the UE.

The network device B locally saves an algorithm list of the second-standard network. The algorithm list records various cipher algorithms supported by the second-standard network, and these cipher algorithms are arranged according to priorities in ascending order or descending order. When obtaining a cipher algorithm for the second-standard network, the network device B may perform matching between a capability of the UE in the second-standard network and the algorithm list to obtain cipher algorithms that are in the algorithm list and for which capabilities are the same as the capability of the UE in the second-standard network, and then obtain, from these algorithms, an algorithm having a highest priority as a cipher algorithm selected for the second-standard network. For example, a network device of a GSM network supports cipher algorithms A5/1, A5/3, and A5/4. A network device of a UMTS network supports cipher algorithms SNOW 3G and Kasumi. A network device of a GPRS network supports cipher algorithms GEA3 and GEA4. A network device of a WiFi network supports a cipher algorithm AES. For a specific process, refer to step 509 in the foregoing embodiment.

Step 805. The network device B generates an AS key of the second-standard network according to the cipher algorithm and the access key.

For different second-standard networks that the network device B is located in, cipher algorithms corresponding to the network device B are different. In this embodiment of the present invention, it is assumed that a cipher algorithm selected by a network device of a GSM network is L1, a cipher algorithm selected by a network device of a UMTS network is L2, and a cipher algorithm selected by a network device of a WiFi network is L3. For example, when the second-standard network is a GSM network, a calculation formula for calculating the AS key is:

$$Kc = KDF(K, L1, "GSM"),$$

where

Kc is the AS key in the GSM network, K is an access key, L1 is an algorithm identifier corresponding to a cipher algorithm selected according to a capability of the UE, "GSM" indicates that the second-standard network is a GSM network, and KDF indicates that the algorithm corresponding to L1 is used.

When the second-standard network is a UMTS network, a calculation formula for calculating the AS key is:

$$CK/IK = KDF(K, L2, "UMTS"),$$

where

CK/IK is the AS key in the UMTS network, K is an access key, L2 is an algorithm identifier corresponding to a cipher algorithm (an encryption algorithm or an integrity protection algorithm) selected according to a capability of the UE, "UMTS" indicates that the second-standard network is a UMTS network, and KDF indicates that the algorithm corresponding to L2 is used.

When the second-standard network is a WiFi network, a calculation formula for calculating the AS key is:

$$PMK = KDF(K, L3, "WiFi"),$$

where

PMK is the AS key in the WiFi network, K is an access key, L3 is an algorithm identifier corresponding to a cipher algorithm selected according to a capability of the UE, "WiFi network" indicates that the second-standard network is a WiFi network, and KDF indicates that the algorithm corresponding to L3 is used.

Step 806. The network device B sends a handover command to the MME.

The network device B is a new network device that is specified by the evolved NodeB to provide a service to the UE. The handover command is used to instruct that the UE be handed over from the first-standard network to the second-standard network, and may include the cipher algorithm selected by the network device B. Specially, the cipher algorithm may be sent to the evolved NodeB by using another command or message, and forwarded to the UE by the evolved NodeB.

Step 807. The MME sends the handover command to the evolved NodeB.

Step 808. The evolved NodeB sends the handover command to the UE.

Step 809. The UE generates the AS key of the second-standard network.

For example, as shown in FIG. 10, a process in which the UE generates the AS key of the second-standard network may include the following steps.

Step 8091. The UE obtains the type identifier of the second-standard network that needs to provide a service to the UE.

In step 801, the evolved NodeB may monitor the status of the UE and the local status in real time. When the UE moves outside the preset cell range, or the load of the evolved NodeB is excessively high, the evolved NodeB may determine, according to multiple conditions such as a current network status and communication quality of the heterogeneous network, a network that can provide a service to the UE as the network (that is, the second-standard network) to which the UE is to be handed over, and send a type identifier of the network to the UE by using a handover command. Therefore, the UE may extract the type identifier of the network from the handover command, and determine the second-standard network according to the type identifier. The second-standard network may be any one of a WiFi network, a GSM network, a UMTS network, or a GPRS network.

Step 8092. The UE determines the access key according to the type identifier of the second-standard network, the preset network key, and the downlink NAS count by using the preset key derivation algorithm.

For example, the UE may obtain, by using a key calculation formula, the access key according to a related parameter in the NAS security context obtained in step 503. The key calculation formula is:

$$K = KDF(downlink\ NAS\ count, Kasme, X),$$

where

K is the access key, "downlink NAS count" is the downlink NAS count, Kasme is the preset network key, X is the type identifier of the second-standard network, where the second-standard network may be any one of a WiFi network, a GSM network, a UMTS network, or a GPRS network, and KDF indicates the preset key derivation algorithm, where the key derivation algorithm is the same as the key derivation algorithm used by the MME in step 8022, for example, an HMAC-SHA256 algorithm.

Step 8093. The UE generates the AS key of the second-standard network according to the cipher algorithm and the access key.

The cipher algorithm is determined by the network device B according to the capability information of the UE in step 804. After selecting the cipher algorithm, the network device B sends the cipher algorithm to the UE. Normally, the network device B may add the cipher algorithm to the handover command generated in step 806, and the UE may obtain the cipher algorithm by parsing the handover command.

AS key calculation methods corresponding to different second-standard networks are different. In this embodiment of the present invention, it is assumed that a cipher algorithm selected by a network device of a GSM network is L1, a cipher algorithm selected by a network device of a UMTS network is L2, and a cipher algorithm selected by a network device of a WiFi network is L3. For example, when the second-standard network is a GSM network, a calculation formula for calculating the AS key is:

$$Kc = KDF(K, L1, "GSM"),$$

where
Kc is the AS key in the GSM network, K is an access key, L1 is an algorithm identifier corresponding to a cipher algorithm selected by the network device B according to a capability of the UE, "GSM" indicates that the second-standard network is a GSM network, and KDF indicates that the algorithm corresponding to L1 is used.

When the second-standard network is a UMTS network, a calculation formula for calculating the AS key is:

$$CK/IK = KDF(K, L2, "UMTS"),$$

where
CK/IK is the AS key in the UMTS network, K is an access key, L2 is an algorithm identifier corresponding to a cipher algorithm selected by the network device B according to a capability of the UE, a type identifier "UMTS" indicates that the second-standard network is a UMTS network, and KDF indicates that the algorithm corresponding to L2 is used.

When the second-standard network is a WiFi network, a calculation formula for calculating the AS key is:

$$PMK = KDF(K, L3, "WiFi"),$$

where
PMK is the AS key in the WiFi network, K is an access key, L3 is an algorithm identifier corresponding to a cipher algorithm selected by the network device B according to a capability of the UE, "WiFi network" indicates that the second-standard network is a WiFi network, and KDF indicates that the algorithm corresponding to L3 is used.

Specially, a sequential order of the steps of the key generation method provided in this embodiment of the present invention may be adjusted to some extent, or a step may be correspondingly added or omitted according to a situation. A changed method that is easily conceived of by any person skilled in the art within the technical scope disclosed in the present invention shall fall within the protection scope of the present invention, and is therefore no longer described in detail.

In the prior art, NAS signaling of a network cannot be used to generate AS signaling of another network. However, in this embodiment of the present invention, a NAS count is a sequence number of NAS signaling. A first network device of a first-standard network may generate an access key according to a type identifier of a second-standard network, a preset network key, and a NAS count. A network device of the second-standard network may determine a cipher algorithm according to capability information of UE that is sent by the first network device of the first-standard network, and generate an AS key of the second-standard network according to the cipher algorithm and the access key. This indicates that NAS signaling in the first-standard network may be used for generation of the AS key in the second-standard network. The AS key is a security key in AS signaling. Therefore, NAS signaling and AS signaling are decoupled in terms of security authentication.

Further, in the prior art, in a heterogeneous network formed by connecting a WiFi network to a core network of an LTE network, when UE accesses the WiFi network, the UE needs to perform security authentication procedure with the WiFi network to generate a key, and when the UE is handed over from the WiFi network to the LTE network, the UE needs to perform an entire security authentication procedure with the LTE network again. However, in this embodiment of the present invention, when the UE accesses the WiFi network, an AS key of the WiFi network is generated according to an access key determined by the LTE. When the UE is handed over from the WiFi network to the LTE network, a first network device (that is, an MME) of the LTE network may select a cipher algorithm according to a capability of the UE in the LTE network, and generate an AS key of the LTE network according to the cipher algorithm and the access key that is generated in advance. An entire security authentication procedure no longer needs to be performed again. Therefore, total communication latency of the heterogeneous network is decreased, and communication load of the heterogeneous network is reduced.

In conclusion, according to the key generation method provided in this embodiment of the present invention, after determining an access key according to NAS information, a first network device of a first-standard network sends the access key to a network device in a second-standard network, so that the network device can generate an AS key of the second-standard network according to the access key. Therefore, the network device in the second-standard network can generate the AS key of the second-standard network by using a key and the NAS information of the first-standard network. This not only avoids a security authentication procedure performed before the AS key of the second-standard network is generated in the prior art, but also ensures security. Correspondingly, total communication latency of a heterogeneous network is decreased, communication load of the heterogeneous network is reduced, and NAS signaling and AS signaling are decoupled in terms of security authentication.

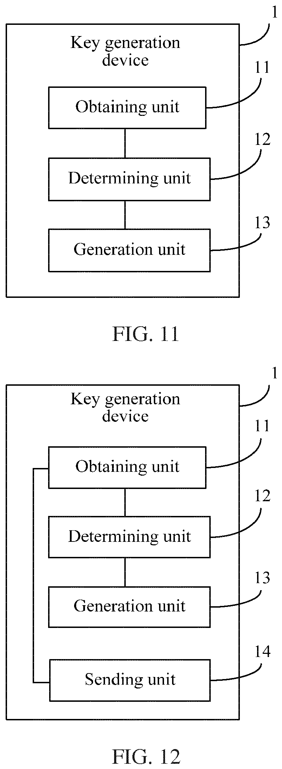

An embodiment of the present invention provides a key generation device 1. The key generation device 1 is located in a first-standard network. The key generation device 1 may be some or all UEs located in the first-standard network. As shown in FIG. 11, the key generation device 1 may include:

an obtaining unit 11, a determining unit 12, and a generation unit 13.

The obtaining unit 11 is configured to: after receiving a first command, obtain a type identifier of a second-standard network that needs to provide a service to the key generation device 1, where the first command is a service request response message, or a handover command, or any message in an air interface secure activation process.

The determining unit 12 is configured to determine an access key according to the type identifier of the second-standard network, a key of the first-standard network, and a non-access stratum NAS count of the first-standard network by using a preset key derivation algorithm.

The generation unit 13 is configured to generate an access stratum AS key of the second-standard network according to the access key.

Optionally, the key generation device 1 and a first network device of the first-standard network share the NAS count and the key of the first-standard network.

In conclusion, according to the key generation device provided in this embodiment of the present invention, after the determining unit determines an access key by using NAS information, the generation unit can generate an AS key of a second-standard network according to the access key. Therefore, the key generation device can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

Optionally, the first command includes a cipher algorithm, and the generation unit 13 is specifically configured to generate the AS key of the second-standard network according to the cipher algorithm and the access key.

Optionally, the first command is a service request response message or any message in an air interface secure activation process. As shown in FIG. 12, the key generation device 1 may further include:

a sending unit 14, where the sending unit 14 is configured to:

send, to a second network device of the first-standard network, a service request message used to request a service, so that the second network device of the first-standard network sends second-standard network indication information to the first network device of the first-standard network according to the service request message, where the second-standard network indication information includes the type identifier of the second-standard network that needs to provide a service to the UE or an identity of the second-standard network that needs to provide a service to the UE; or send, to a second network device of the first-standard network, a first service request message used to request a service, so that the second network device of the first-standard network sends a second service request message to the first network device of the first-standard network according to the first service request message, where the second service request message includes the type identifier of the second-standard network that needs to provide a service to the UE or an identity of the second-standard network that needs to provide a service to the UE.

It should be noted that the first-standard network is an LTE network, and the second-standard network is at least one of a GSM network, a UMTS network, a GPRS network, or a WiFi network.

In conclusion, according to the key generation device provided in this embodiment of the present invention, after the determining unit determines an access key by using NAS information, the generation unit can generate an AS key of a second-standard network according to the access key. Therefore, the key generation device can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

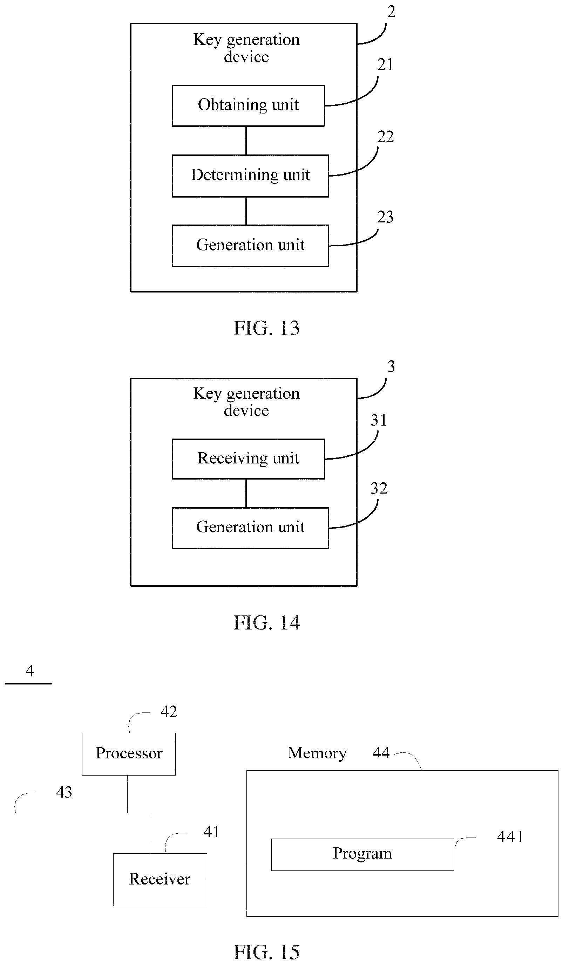

An embodiment of the present invention provides a key generation device 2. The key generation device 2 is located in a first-standard network. The key generation device 2 may be some or all first network devices located in the first-standard network. As shown in FIG. 13, the key generation device 2 may include:

an obtaining unit 21, a determining unit 22, and a sending unit 23.

The obtaining unit 21 is configured to: after receiving a request message sent by a second network device of the first-standard network, obtain a type identifier of a second-standard network that needs to provide a service to UE located in the first-standard network, where the request message is a service request message or a handover request message.

The determining unit 22 is configured to determine an access key according to the type identifier of the second-standard network, a key of the first-standard network, and a non-access stratum NAS count of the first-standard network by using a preset key derivation algorithm.

The sending unit 23 is configured to send the access key to a network device of the second-standard network, so that the network device of the second-standard network generates an access stratum AS key of the second-standard network according to the access key.

Optionally, the key generation device and the UE share the NAS count and the key of the first-standard network.

In conclusion, according to the key generation device provided in this embodiment of the present invention, after the determining unit determines an access key by using NAS information, the sending unit sends the access key to a network device in a second-standard network, so that the network device can generate an AS key of the second-standard network according to the access key. Therefore, the network device in the second-standard network can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

Optionally, the obtaining unit 21 is further configured to obtain capability information of the UE, where the capability information of the UE includes a capability of the UE in the second-standard network. The sending unit 23 is specifically configured to send the capability information of the UE and the access key to the network device of the second-standard network, so that the network device of the second-standard network determines a cipher algorithm according to the capability information of the UE, and generates the AS key of the second-standard network according to the cipher algorithm and the access key.

Optionally, the request message includes the type identifier of the second-standard network that needs to provide a service to the UE located in the first-standard network or an identity of the second-standard network that needs to provide a service to the UE located in the first-standard network. The obtaining unit 21 is specifically configured to: obtain the type identifier of the second-standard network from the request message; or determine the type identifier of the second-standard network according to the identity of the second-standard network.

Further, the obtaining unit 21 is specifically configured to:

receive second-standard network indication information sent by the second network device of the first-standard network, where the second-standard network indication information includes the type identifier of the second-standard network; or receive second-standard network indication information sent by the second network device of the first-standard network, where the second-standard network indication information includes an identity of the second-standard network; and determine the type identifier of the second-standard network according to the identity of the second-standard network.

The sending unit 23 is specifically configured to send the access key to the network device of the second-standard network via the second network device of the first-standard network.

The first-standard network is an LTE network, and the second-standard network is at least one of a GSM network, a UMTS network, a GPRS network, or a Wireless Fidelity WiFi network.

In conclusion, according to the key generation device provided in this embodiment of the present invention, after the determining unit determines an access key by using NAS information, the sending unit sends the access key to a network device in a second-standard network, so that the network device can generate an AS key of the second-standard network according to the access key. Therefore, the network device in the second-standard network can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

An embodiment of the present invention provides a key generation device 3. The key generation device 3 is located in a second-standard network. The key generation device 3 may be a network device of the second-standard network. As shown in FIG. 14, the key generation device 3 may include a receiving unit 31 and a generation unit 32.

The receiving unit 31 is configured to receive an access key sent by a first network device of a first-standard network, where the access key is determined by the first network device of the first-standard network according to a type identifier of the second-standard network, a key of the first-standard network, and a non-access stratum NAS count of the first-standard network.

The generation unit 32 is configured to generate an access stratum AS key of the second-standard network according to the access key.

UE located in the first-standard network and the first network device of the first-standard network share the NAS count and the key of the first-standard network.

In conclusion, according to the key generation device provided in this embodiment of the present invention, after the receiving unit receives an access key sent by a first network device of a first-standard network, the generation unit generates an access stratum AS key of the second-standard network according to the access key. The access key is determined by the first network device of the first-standard network according to a type identifier of the second-standard network and a key and a NAS count of the first-standard network. That is, a network device in the second-standard network can generate the AS key of the second-standard network by using the key and NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

Further, the generation unit 32 is specifically configured to: receive capability information that is of the UE and that is sent by the first network device of the first-standard network, where the capability information of the UE includes a capability of the UE in the second-standard network; determine a cipher algorithm according to the capability information of the UE; and generate the AS key of the second-standard network according to the cipher algorithm and the access key.

Optionally, the receiving unit 31 is specifically configured to receive the access key that is sent by the first network device of the first-standard network via a second network device of the first-standard network.

The first-standard network is an LTE network, and the second-standard network is at least one of a GSM network, a UMTS network, a GPRS network, or a WiFi network.

In conclusion, according to the key generation device provided in this embodiment of the present invention, after the receiving unit receives an access key sent by a first network device of a first-standard network, the generation unit generates an access stratum AS key of a second-standard network according to the access key. The access key is determined by the first network device of the first-standard network according to a type identifier of the second-standard network and a key and a NAS count of the first-standard network. That is, a network device in the second-standard network can generate the AS key of the second-standard network by using the key and NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

The first-standard network is an LTE network, and the second-standard network is at least one of a GSM network, a UMTS network, a GPRS network, or a WiFi network.

In conclusion, according to the key generation device provided in this embodiment of the present invention, after determining an access key by using NAS information, a processor can generate an AS key of a second-standard network according to the access key. Therefore, the key generation device can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

An embodiment of the present invention provides a key generation device 4. The key generation device 4 is located in a first-standard network. The key generation device 4 may be a part of or entire UE of the first-standard network. As shown in FIG. 15, the key generation device may include a receiver 41, a processor 42 (for example, a CPU), a bus 43, and a memory 44. The bus 43 is configured to connect the receiver 41, the processor 42, and the memory 44, and the processor 42 is configured to execute a program 441 stored in the memory 44. The memory 44 may include a high-speed random access memory (English: Random Access Memory, RAM for short), and may further include a non-volatile memory (non-volatile memory), for example, at least one magnetic disk memory.

The processor 42 is configured to: after the receiver 41 receives a first command, obtain a type identifier of a second-standard network that needs to provide a service to the key generation device 4, where the first command is a service request response message, or a handover command, or any message in an air interface secure activation process.

The processor 42 is further configured to determine an access key according to the type identifier of the second-standard network, a key of the first-standard network, and a non-access stratum NAS count of the first-standard network by using a preset key derivation algorithm.

The processor 42 is further configured to generate an access stratum AS key of the second-standard network according to the access key.

In conclusion, according to the key generation device provided in this embodiment of the present invention, after determining an access key by using NAS information, the processor can generate an AS key of a second-standard network according to the access key. Therefore, the key generation device can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

Optionally, the key generation device and a first network device of the first-standard network share the NAS count and the key of the first-standard network.

Optionally, the first command includes a cipher algorithm, and the processor 42 is specifically configured to generate the AS key of the second-standard network according to the cipher algorithm and the access key.

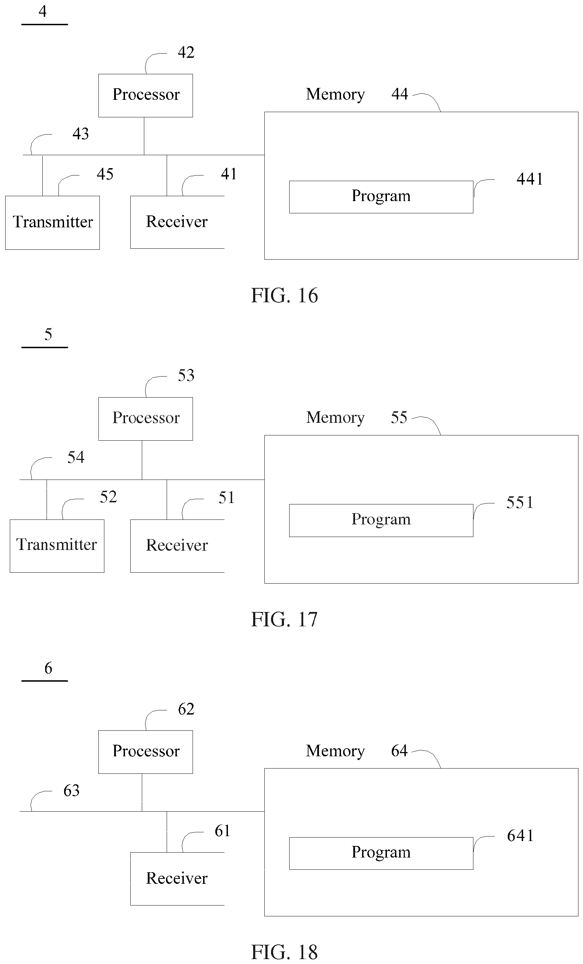

Optionally, as shown in FIG. 16, the first command is a service request response message or any message in an air interface secure activation process. The key generation device 4 may further include:

a transmitter 45, where the transmitter 45 is configured to:

send, to a second network device of the first-standard network, a service request message used to request a service, so that the second network device of the first-standard network sends second-standard network indication information to the first network device of the first-standard network according to the service request message, where the second-standard network indication information includes the type identifier of the second-standard network that needs to provide a service to the UE or an identity of the second-standard network that needs to provide a service to the UE; or

send, to a second network device of the first-standard network, a first service request message used to request a service, so that the second network device of the first-standard network sends a second service request message to the first network device of the first-standard network according to the first service request message, where the second service request message includes the type identifier of the second-standard network that needs to provide a service to the UE or an identity of the second-standard network that needs to provide a service to the UE.

The first-standard network is an LTE network, and the second-standard network is at least one of a GSM network, a UMTS network, a GPRS network, or a WiFi network.

In conclusion, according to the key generation device provided in this embodiment of the present invention, after determining an access key by using NAS information, the processor can generate an AS key of a second-standard network according to the access key. Therefore, the key generation device can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

An embodiment of the present invention provides a key generation device 5. As shown in FIG. 17, the key generation device 5 is located in a first-standard network. The key generation device 5 may be a part of or an entire first network device of the first-standard network. The key generation device 5 includes a receiver 51, a transmitter 52, a processor 53, a bus 54, and a memory 55. The bus 54 is configured to connect the receiver 51, the transmitter 52, the processor 53, and the memory 55, and the processor 53 is configured to execute a program 551 stored in the memory 55.

The processor 53 is configured to: after the receiver receives a request message sent by a second network device of the first-standard network, obtain a type identifier of a second-standard network that needs to provide a service to UE located in the first-standard network, where the request message is a service request message or a handover request message.

The processor 53 is further configured to determine an access key according to the type identifier of the second-standard network, a key of the first-standard network, and a non-access stratum NAS count of the first-standard network by using a preset key derivation algorithm.

The transmitter 52 is configured to send the access key to a network device of the second-standard network, so that the network device of the second-standard network generates an access stratum AS key of the second-standard network according to the access key.

In conclusion, according to the key generation device provided in this embodiment of the present invention, after the processor determines an access key according to NAS information, the transmitter sends the access key to a network device in a second-standard network, so that the network device can generate an AS key of the second-standard network according to the access key. Therefore, the processor can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

Optionally, the key generation device 5 and the UE share the NAS count and the key of the first-standard network.

Optionally, the processor 53 is further configured to obtain capability information of the UE, where the capability information of the UE includes a capability of the UE in the second-standard network.

The transmitter 52 is specifically configured to send the capability information of the UE and the access key to the network device of the second-standard network, so that the network device of the second-standard network determines a cipher algorithm according to the capability information of the UE, and generates the AS key of the second-standard network according to the cipher algorithm and the access key.

Optionally, the request message includes the type identifier of the second-standard network that needs to provide a service to the UE located in the first-standard network or an identity of the second-standard network that needs to provide a service to the UE located in the first-standard network; and the processor 53 is specifically configured to:

obtain the type identifier of the second-standard network from the request message; or
determine the type identifier of the second-standard network according to the identity of the second-standard network.

Optionally, the receiver 51 is specifically configured to:

receive second-standard network indication information sent by the second network device of the first-standard network, where the second-standard network indication information includes the type identifier of the second-standard network; or
receive second-standard network indication information sent by the second network device of the first-standard network, where the second-standard network indication information includes an identity of the second-standard network; and determine the type identifier of the second-standard network according to the identity of the second-standard network.

Optionally, the transmitter 52 is specifically configured to:

send the access key to the network device of the second-standard network via the second network device of the first-standard network.

The first-standard network is an LTE network, and the second-standard network is at least one of a GSM network, a UMTS network, a GPRS network, or a WiFi network.

In conclusion, according to the key generation device provided in this embodiment of the present invention, after the processor determines an access key according to NAS information, the transmitter sends the access key to a network device in a second-standard network, so that the network device can generate an AS key of the second-standard network according to the access key. Therefore, the processor can generate the AS key of the second-standard network by using a key and NAS information of a first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

An embodiment of the present invention provides a key generation device 6. As shown in FIG. 18, the key generation device 6 is located in a second-standard network. The key generation device 6 may be a part of or an entire network device of the second-standard network. The key generation device 6 may include a receiver 61, a processor 62, a bus 63, and a memory 64. The bus 63 is configured to connect the receiver 61, the processor 62, and the memory 64, and the processor 62 is configured to execute a program 641 stored in the memory 64.

The receiver 61 is configured to receive an access key sent by a first network device of a first-standard network, where the access key is determined by the first network device of the first-standard network according to a type identifier of the second-standard network, a key of the first-standard network, and a non-access stratum NAS count of the first-standard network.

The processor 62 is configured to generate an access stratum AS key of the second-standard network according to the access key.

UE located in the first-standard network and the first network device of the first-standard network share the NAS count and the key of the first-standard network.

In conclusion, according to the key generation device provided in this embodiment of the present invention, after the receiver receives an access key sent by a first network device of a first-standard network, the processor generates an access stratum AS key of a second-standard network according to the access key. The access key is determined by the first network device of the first-standard network according to a type identifier of the second-standard network and a key and a NAS count of the first-standard network. That is, the network device in the second-standard network can generate the AS key of the second-standard network by using the key and NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

Optionally, the receiver 61 is further configured to:

receive capability information that is of the UE and that is sent by the first network device of the first-standard network, where the capability information of the UE includes a capability of the UE in the second-standard network.

The processor 62 is specifically configured to: determine a cipher algorithm according to the capability information of the UE; and generate the AS key of the second-standard network according to the cipher algorithm and the access key.

Optionally, the receiver 61 is specifically configured to:

receive the access key that is sent by the first network device of the first-standard network via a second network device of the first-standard network.

The first-standard network is an LTE network, and the second-standard network is at least one of a GSM network, a UMTS network, a GPRS network, or a WiFi network.

In conclusion, according to the key generation device provided in this embodiment of the present invention, after the receiver receives an access key sent by a first network device of a first-standard network, the processor generates an access stratum AS key of a second-standard network according to the access key. The access key is determined by the first network device of the first-standard network according to a type identifier of the second-standard network and a key and a NAS count of the first-standard network. That is, a network device in the second-standard network can generate the AS key of the second-standard network by using the key and NAS information of the first-standard network. This not only avoids a security authentication procedure performed before the AS key of the second-standard network is generated in the prior art, but also ensures security. Correspondingly, total communication latency of a heterogeneous network is decreased, and communication load of the heterogeneous network is reduced.

An embodiment of the present invention provides a key generation system. The key generation system may include:

the key generation device 1 shown in FIG. 11 or FIG. 12; and the key generation device 2 shown in FIG. 13.

Further, the key generation system may further include the key generation device 3 shown in FIG. 14.

In actual application, the key generation system may include at least one of the key generation device 1 shown in FIG. 11 or FIG. 12, the key generation device 2 shown in FIG. 13, or the key generation device 3 shown in FIG. 14. For example, the key generation system may include the key generation device 1 shown in FIG. 11 or FIG. 12 and the key generation device 3 shown in FIG. 14. For another example, the key generation system may include the key generation device 2 shown in FIG. 13 and the key generation device 3 shown in FIG. 14.

An embodiment of the present invention provides a key generation system. The key generation system may include:

the key generation device 4 shown in FIG. 15 or FIG. 16; and the key generation device 5 shown in FIG. 17.

Further, the key generation system may further include the key generation device 6 shown in FIG. 18.

In actual application, the key generation system may include at least one of the key generation device 4 shown in FIG. 15 or FIG. 16, the key generation device 5 shown in FIG. 17, or the key generation device 6 shown in FIG. 18. For example, the key generation system may include the key generation device 4 shown in FIG. 15 or FIG. 16 and the key generation device 6 shown in FIG. 18. For another example, the key generation system may include the key generation device 5 shown in FIG. 17 and the key generation device 6 shown in FIG. 18.

It may be clearly understood by a person skilled in the art that, for the purpose of convenient and brief description, for a detailed working process of the foregoing system, device, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely example embodiments of the present invention, but are not intended to limit the present invention. Any modification, equivalent replacement, and improvement made without departing from the spirit and principle of the present invention shall fall within the protection scope of the present invention.

## Claims

1. A key generation method, wherein the method comprises:

   after receiving a first command, obtaining, by user equipment UE located in a first-standard network, a type identifier of a second-standard network that needs to provide a service to the UE, wherein the first command is a service request response message, or a handover command, or any message in an air interface secure activation process;
   determining, by the UE, an access key according to the type identifier of the second-standard network, a key of the first-standard network, and a non-access stratum NAS count of the first-standard network by using a preset key derivation algorithm; and
   generating, by the UE, an access stratum AS key of the second-standard network according to the access key.

2. The method according to claim 1, wherein the UE and a first network device of the first-standard network share the NAS count and the key of the first-standard network.

3. The method according to claim 1 or 2, wherein the first command comprises a cipher algorithm, and
   the generating, by the UE, an access stratum AS key of the second-standard network according to the access key comprises:

   generating, by the UE, the AS key of the second-standard network according to the cipher algorithm and the access key.

4. The method according to any one of claims 1 to 3, wherein the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

5. A key generation method, wherein the method comprises:

   after receiving a request message sent by a second network device of a first-standard network, obtaining, by a first network device of the first-standard network, a type identifier of a second-standard network that needs to provide a service to user equipment UE located in the first-standard network, wherein the request message is a service request message or a handover request message;
   determining, by the first network device of the first-standard network, an access key according to the type identifier of the second-standard network, a key of the first-standard network, and a non-access stratum NAS count of the first-standard network by using a preset key derivation algorithm; and
   sending, by the first network device of the first-standard network, the access key to a network device of the second-standard network, so that the network device of the second-standard network generates an access stratum AS key of the second-standard network according to the access key.

6. The method according to claim 5, wherein the first network device and the UE of the first-standard network share the NAS count and the key of the first-standard network.

7. The method according to claim 5 or 6, wherein before the obtaining a type identifier of a second-standard network that needs to provide a service to user equipment UE located in the first-standard network, the method further comprises:

obtaining, by the first network device of the first-standard network, capability information of the UE, wherein the capability information of the UE comprises a capability of the UE in the second-standard network; and
the sending, by the first network device of the first-standard network, the access key to a network device of the second-standard network, so that the network device of the second-standard network generates an access stratum AS key of the second-standard network according to the access key comprises:

sending, by the first network device of the first-standard network, the capability information of the UE and the access key to the network device of the second-standard network, so that the network device of the second-standard network determines a cipher algorithm according to the capability information of the UE, and generates the AS key of the second-standard network according to the cipher algorithm and the access key.

8. The method according to any one of claims 5 to 7, wherein the request message comprises the type identifier of the second-standard network that needs to provide a service to the UE located in the first-standard network or an identity of the second-standard network that needs to provide a service to the UE located in the first-standard network; and
the obtaining a type identifier of a second-standard network that needs to provide a service to user equipment UE located in the first-standard network comprises:

obtaining, by the first network device of the first-standard network, the type identifier of the second-standard network from the request message; or
determining, by the first network device of the first-standard network, the type identifier of the second-standard network according to the identity of the second-standard network.

9. The method according to any one of claims 5 to 7, wherein the obtaining a type identifier of a second-standard network that needs to provide a service to user equipment UE located in the first-standard network comprises:

receiving, by the first network device of the first-standard network, second-standard network indication information sent by the second network device of the first-standard network, wherein the second-standard network indication information comprises the type identifier of the second-standard network; or
receiving, by the first network device of the first-standard network, second-standard network indication information sent by the second network device of the first-standard network, wherein the second-standard network indication information comprises an identity of the second-standard network; and determining, by the first network device of the first-standard network, the type identifier of the second-standard network according to the identity of the second-standard network.

10. The method according to any one of claims 5 to 9, wherein the sending, by the first network device of the first-standard network, the access key to a network device of the second-standard network comprises:

sending, by the first network device of the first-standard network, the access key to the network device of the second-standard network via the second network device of the first-standard network.

11. The method according to any one of claims 5 to 10, wherein the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

12. A key generation method, wherein the method comprises:

receiving, by a network device of a second-standard network, an access key sent by a first network device of a first-standard network, wherein the access key is determined by the first network device of the first-standard network according to a type identifier of the second-standard network, a key of the first-standard network, and a non-access stratum NAS count of the first-standard network; and
generating, by the network device of the second-standard network, an access stratum AS key of the second-standard network according to the access key.

13. The method according to claim 12, wherein the generating, by the network device of the second-standard network, an access stratum AS key of the second-standard network according to the access key comprises:

receiving, by the network device of the second-standard network, capability information of UE that is sent by the first network device of the first-standard network, wherein the capability information of the UE comprises a capability of the UE in the second-standard network;
determining, by the network device of the second-standard network, a cipher algorithm according to the capability information of the UE; and
generating, by the network device of the second-standard network, the AS key of the second-standard network according to the cipher algorithm and the access key.

14. The method according to claim 12 or 13, wherein the receiving, by a network device of a second-standard network, an access key sent by a first network device of a first-standard network comprises:

receiving, by the network device of the second-standard network, the access key that is sent by the first network device of the first-standard network via a second network device of the first-standard network.

15. The method according to any one of claims 12 to 14, wherein
the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

16. A key generation device, wherein the key generation device is located in a first-standard network, and the key generation device comprises:

an obtaining unit, configured to: after receiving a first command, obtain a type identifier of a second-standard network that needs to provide a service to the key generation device, wherein the first command is a service request response message, or a handover command, or any message in an air interface secure activation process;
a determining unit, configured to determine an access key according to the type identifier of the second-standard network, a key of the first-standard network, and a non-access stratum NAS count of the first-standard network by using a preset key derivation algorithm; and
a generation unit, configured to generate an access stratum AS key of the second-standard network according to the access key.

17. The key generation device according to claim 16, wherein the key generation device and a first network device of the first-standard network share the NAS count and the key of the first-standard network.

18. The key generation device according to claim 16 or 17, wherein the first command comprises a cipher algorithm, and the generation unit is specifically configured to:

generate the AS key of the second-standard network according to the cipher algorithm and the access key.

19. The device according to any one of claims 16 to 18, wherein the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

20. A key generation device, wherein the key generation device is located in a first-standard network, and the key generation device comprises:

an obtaining unit, configured to: after receiving a request message sent by a second network device of the first-standard network, obtain a type identifier of a second-standard network that needs to provide a service to user equipment UE located in the first-standard network, wherein the request message is a service request message or a handover request message;
a determining unit, configured to determine an access key according to the type identifier of the second-standard network, a key of the first-standard network, and a non-access stratum NAS count of the first-standard network by using a preset key derivation algorithm; and

a sending unit, configured to send the access key to a network device of the second-standard network, so that the network device of the second-standard network generates an access stratum AS key of the second-standard network according to the access key.

21. The device according to claim 20, wherein the key generation device and the UE share the NAS count and the key of the first-standard network.

22. The device according to claim 20 or 21, wherein
the obtaining unit is further configured to obtain capability information of the UE, wherein the capability information of the UE comprises a capability of the UE in the second-standard network; and
the sending unit is specifically configured to send the capability information of the UE and the access key to the network device of the second-standard network, so that the network device of the second-standard network determines a cipher algorithm according to the capability information of the UE, and generates the AS key of the second-standard network according to the cipher algorithm and the access key.

23. The device according to any one of claims 20 to 22, wherein the request message comprises the type identifier of the second-standard network that needs to provide a service to the UE located in the first-standard network or an identity of the second-standard network that needs to provide a service to the UE located in the first-standard network; and the obtaining unit is specifically configured to:

obtain the type identifier of the second-standard network from the request message; or
determine the type identifier of the second-standard network according to the identity of the second-standard network.

24. The device according to any one of claims 20 to 22, wherein the obtaining unit is specifically configured to:

receive second-standard network indication information sent by the second network device of the first-standard network, wherein the second-standard network indication information comprises the type identifier of the second-standard network; or
receive second-standard network indication information sent by the second network device of the first-standard network, wherein the second-standard network indication information comprises an identity of the second-standard network; and determine the type identifier of the second-standard network according to the identity of the second-standard network.

25. The device according to any one of claims 20 to 24, wherein the sending unit is specifically configured to:

send the access key to the network device of the second-standard network via the second network device of the first-standard network.

26. The device according to any one of claims 20 to 25, wherein the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

27. A key generation device, wherein the key generation device is located in a second-standard network, and the key generation device comprises:

a receiving unit, configured to receive an access key sent by a first network device of a first-standard network, wherein the access key is determined by the first network device of the first-standard network according to a type identifier of the second-standard network, a key of the first-standard network, and a non-access stratum NAS count of the first-standard network; and
a generation unit, configured to generate an access stratum AS key of the second-standard network according to the access key.

28. The device according to claim 27, wherein the generation unit is specifically configured to:

receive capability information of UE that is sent by the first network device of the first-standard network, wherein the capability information of the UE comprises a capability of the UE in the second-standard network; determine a cipher algorithm according to the capability information of the UE; and generate the AS key of the second-standard network according to the cipher algorithm and the access key.

29. The device according to claim 27 or 28, wherein the receiving unit is specifically configured to:

receive the access key that is sent by the first network device of the first-standard network via a second network device of the first-standard network.

30. The device according to any one of claims 27 to 29, wherein
the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

31. A key generation device, wherein the key generation device is located in a first-standard network, and the key generation device comprises a receiver, a processor, a bus, and a memory, wherein the bus is configured to connect the receiver, the processor, and the memory, and the processor is configured to execute a program stored in the memory;
the processor is configured to: after the receiver receives a first command, obtain a type identifier of a second-standard network that needs to provide a service to the key generation device, wherein the first command is a service request response message, or a handover command, or any message in an air interface secure activation process;
the processor is further configured to determine an access key according to the type identifier of the second-standard network, a key of the first-standard network, and a non-access stratum NAS count of the first-standard network by using a preset key derivation algorithm; and
the processor is further configured to generate an access stratum AS key of the second-standard network according to the access key.

32. The device according to claim 31, wherein the key generation device and a first network device of the first-standard network share the NAS count and the key of the first-standard network.

33. The device according to claim 31 or 32, wherein the first command comprises a cipher algorithm, and the processor is specifically configured to generate the AS key of the second-standard network according to the cipher algorithm and the access key.

34. The device according to any one of claims 31 to 33, wherein the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

35. A key generation device, wherein the key generation device is located in a first-standard network, and the key generation device comprises a receiver, a transmitter, a processor, a bus, and a memory, wherein the bus is configured to connect the receiver, the transmitter, the processor, and the memory, and the processor is configured to execute a program stored in the memory;
the processor is configured to: after the receiver receives a request message sent by a second network device of the first-standard network, obtain a type identifier of a second-standard network that needs to provide a service to user equipment UE located in the first-standard network, wherein the request message is a service request message or a handover request message;
the processor is further configured to determine an access key according to the type identifier of the second-standard network, a key of the first-standard network, and a non-access stratum NAS count of the first-standard network by using a preset key derivation algorithm; and
the transmitter is configured to send the access key to a network device of the second-standard network, so that the network device of the second-standard network generates an access stratum AS key of the second-standard network according to the access key.

36. The device according to claim 35, wherein the key generation device and the UE share the NAS count and the key of the first-standard network.

**37.** The device according to claim 35 or 36, wherein
the processor is further configured to obtain capability information of the UE, wherein the capability information of the UE comprises a capability of the UE in the second-standard network; and
the transmitter is specifically configured to send the capability information of the UE and the access key to the network device of the second-standard network, so that the network device of the second-standard network determines a cipher algorithm according to the capability information of the UE, and generates the AS key of the second-standard network according to the cipher algorithm and the access key.

**38.** The device according to any one of claims 35 to 37, wherein the request message comprises the type identifier of the second-standard network that needs to provide a service to the UE located in the first-standard network or an identity of the second-standard network that needs to provide a service to the UE located in the first-standard network; and
the processor is specifically configured to:

obtain the type identifier of the second-standard network from the request message; or
determine the type identifier of the second-standard network according to the identity of the second-standard network.

**39.** The device according to any one of claims 35 to 37, wherein
the receiving unit is specifically configured to receive second-standard network indication information sent by the second network device of the first-standard network, wherein the second-standard network indication information comprises the type identifier of the second-standard network; or
receive second-standard network indication information sent by the second network device of the first-standard network, wherein the second-standard network indication information comprises an identity of the second-standard network; and determine the type identifier of the second-standard network according to the identity of the second-standard network.

**40.** The device according to any one of claims 35 to 39, wherein the transmitter is specifically configured to:

send the access key to the network device of the second-standard network via the second network device of the first-standard network.

**41.** The device according to any one of claims 35 to 40, wherein the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

**42.** A key generation device, wherein the key generation device is located in a second-standard network, and the key generation device comprises a receiver, a processor, a bus, and a memory, wherein the bus is configured to connect the receiver, the processor, and the memory, and the processor is configured to execute a program stored in the memory;
the receiver is configured to receive an access key sent by a first network device of a first-standard network, wherein the access key is determined by the first network device of the first-standard network according to a type identifier of the second-standard network, a key of the first-standard network, and a non-access stratum NAS count of the first-standard network; and
the processor is configured to generate an access stratum AS key of the second-standard network according to the access key.

**43.** The device according to claim 42, wherein the receiver is further configured to:

receive capability information of UE that is sent by the first network device of the first-standard network, wherein the capability information of the UE comprises a capability of the UE in the second-standard network; and
the processor is specifically configured to:

determine a cipher algorithm according to the capability information of the UE; and
generate the AS key of the second-standard network according to the cipher algorithm and the access key.

**44.** The device according to claim 42 or 43, wherein the receiver is specifically configured to:

receive the access key that is sent by the first network device of the first-standard network via a second network device of the first-standard network.

**45.** The device according to any one of claims 42 to 44, wherein
the first-standard network is a Long Term Evolution LTE network, and the second-standard network is at least one of a Global System for Mobile Communications GSM network, a Universal Mobile Telecommunications System UMTS network, a General Packet Radio Service GPRS network, or a Wireless Fidelity WiFi network.

**46.** A key generation system, wherein the system comprises:

the key generation device according to any one of claims 16 to 19; and
the key generation device according to any one of claims 20 to 26.

**47.** The network according to claim 46, wherein the key generation system further comprises:

the key generation device according to any one of claims 27 to 29.

0

Heterogeneous
network

01

First-standard
network

011

02

Second-standard
network 021

03

012

FIG. 1

201

After receiving a first command, user equipment UE located in a
first-standard network obtains a type identifier of a second-
standard network that needs to provide a service to the UE

202

The UE determines an access key according to the type identifier
of the second-standard network, a key of the first-standard
network, and a non-access stratum NAS count of the first-
standard network by using a preset key derivation algorithm

203

The UE generates an AS key of the second-standard network
according to the access key

FIG. 2

301

After receiving a request message sent by a second network device of a first-standard network, a first network device of the first-standard network obtains a type identifier of a second-standard network that needs to provide a service to user equipment UE located in the first-standard network

302

The first network device of the first-standard network determines an access key according to the type identifier of the second-standard network, a key of the first-standard network, and a non-access stratum NAS count of the first-standard network by using a preset key derivation algorithm

303

The first network device of the first-standard network sends the access key to a network device of the second-standard network, so that the network device of the second-standard network generates an AS key of the second-standard network according to the access key

FIG. 3

401

A network device of a second-standard network receives an access key sent by a first network device of a first-standard network

402

The network device of the second-standard network generates an AS key of the second-standard network according to the access key

FIG. 4

| UE | Evolved NodeB | MME | Network device A |
|---|---|---|---|

501
Establish a radio resource control connection

502
Send capability information of UE

503
Perform an EPS AKA authentication procedure and a NAS SMC procedure

504
Send a service request message

505
Send a service request response message

506
Send the service request message

507
Generate an access key of a second-standard network

508
Send the capability information of the UE and the access key

509
Determine a cipher algorithm according to the capability information of the UE

510
Generate an AS key of the second-standard network according to the cipher algorithm and the access key

511
Generate the AS key of the second-standard network

FIG. 5

5071

An MME obtains a type identifier of the second-standard network that needs to provide a service to the UE

5072

The MME determines the access key according to the type identifier of the second-standard network, a preset network key, and an uplink NAS count by using a preset key derivation algorithm

FIG. 6

5111

The UE obtains the type identifier of the second-standard network that needs to provide a service to the UE

5112

The UE determines the access key according to the type identifier of the second-standard network, the preset network key, and the uplink NAS count by using the preset key derivation algorithm

5113

The UE generates the AS key of the second-standard network according to the cipher algorithm and the access key

FIG. 7

| UE | Evolved NodeB | MME | Network device B |
|---|---|---|---|

801
Send a handover request message

802
Generate an access key of a second-standard network

803
Send capability information of UE and the access key

804
Determine a cipher algorithm according to the capability information of the UE

805
Generate an AS key of the second-standard network according to the cipher and the access key

806
Send a handover command

807
Send the handover command

808
Send the handover command

809
Generate the AS key of the second-standard network

FIG. 8

8021

An MME obtains a type identifier of the second-standard network that needs to provide a service to UE

8022

The MME determines the access key according to the type identifier of the second-standard network, a preset network key, and a downlink NAS count by using a preset key derivation algorithm

FIG. 9

8091

The UE obtains the type identifier of the second-standard network that needs to provide a service to the UE

8092

The UE determines the access key according to the type identifier of the second-standard network, the preset network key, and the downlink NAS count by using the preset key derivation algorithm

8093

The UE generates the AS key of the second-standard network according to the cipher algorithm and the access key

FIG. 10

Key generation
device                                    1

Obtaining unit                          11

Determining unit                        12

Generation unit                         13

FIG. 11

Key generation
device                                    1

Obtaining unit                          11

Determining unit                        12

Generation unit                         13

Sending unit                            14

FIG. 12

2

Key generation
device

21

Obtaining unit

22

Determining unit

23

Generation unit

FIG. 13

3

Key generation
device

31

Receiving unit

32

Generation unit

FIG. 14

4

42

Processor

Memory      44

43

41

Receiver

Program          441

FIG. 15

4

42

Processor

43

45

Transmitter

41

Receiver

Memory    44

Program    441

FIG. 16

5

53

Processor

54

52

Transmitter

51

Receiver

Memory    55

Program    551

FIG. 17

6

62

Processor

63

61

Receiver

Memory    64

Program    641

FIG. 18

# INTERNATIONAL SEARCH REPORT

International application No.

PCT/CN2015/073400

**A. CLASSIFICATION OF SUBJECT MATTER**

H04W 12/04 (2009.01) i; H04W 12/06 (2009.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT, CNABS, CPRSABS, TWABS, SIPOABS, DWPI: hetnet, heterogeneous, lte-hi, lte-lan, cross-domain, key, encrypt+, NAS

**C. DOCUMENTS CONSIDERED TO BE RELEVANT**

| Category* | Citation of document, with indication, where appropriate, of the relevant passages | Relevant to claim No. |
|---|---|---|
| X | CN 103428690 A (HUAWEI TECHNOLOGIES CO., LTD.) 04 December 2013 (04.12.2013) description, paragraphs [0070] to [0099], paragraphs [0159] to [0178], and figures 1 and 5 | 1-47 |
| A | CN 102413467 A (ZTE CORPORATION) 11 April 2012 (11.04.2012) description, paragraphs [0088] to [0119], and figures 1 and 2 | 1-47 |
| A | WO 2010077007 A2 (SAMSUNG ELECTRONICS CO., LTD.) 08 July 2010 (08.07.2010) the whole document | 1-47 |

☐ Further documents are listed in the continuation of Box C. ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" document member of the same patent family | |

| Date of the actual completion of the international search | Date of mailing of the international search report |
|---|---|
| 25 November 2015 | 18 December 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHANG, Hui<br><br>Telephone No. (86-10) 62412032 |

Form PCT/ISA /210 (second sheet) (July 2009)

**INTERNATIONAL SEARCH REPORT**
Information on patent family members

| | | International application No. |
|---|---|---|
| | | PCT/CN2015/073400 |

| Patent Documents referred in the Report | Publication Date | Patent Family | Publication Date |
|---|---|---|---|
| CN 103428690 A | 04 December 2013 | US 2015082393 A1 | 19 March 2015 |
| | | WO 2013174267 A1 | 28 November 2013 |
| | | EP 2854329 A1 | 01 April 2015 |
| CN 102413467 A | 11 April 2012 | US 2015010154 A1 | 08 January 2015 |
| | | EP 2787753 A1 | 08 October 2014 |
| | | WO 2013078858 A1 | 06 June 2013 |
| WO 2010077007 A2 | 08 July 2010 | KR 2010007382 A | 08 July 2010 |
| | | WO 2010077007 A3 | 23 September 2010 |
| | | US 8887251 B2 | 11 November 2014 |
| | | KR 1556906 B1 | 06 October 2015 |
| | | US 2012005731 A1 | 05 January 2012 |

Form PCT/ISA /210 (patent family annex) (July 2009)